# EUROPEAN PATENT APPLICATION

(11) **EP 4 723 582 A1**
(43) Date of publication of application: **08.04.2026**
(21) Application number: 24306631.3
(22) Date of filing: 04.10.2024
(51) Int. Cl.: H04L 45/021, H04L 45/12, H04L 47/50, H04L 47/625, H04W 84/06

(54) **PACKAGE ROUTING IN DELAY TOLERANT NETWORKING**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: CORLAY, Vincent, 35708 Rennes cedex 7 (FR); ALHAJJ, Tania, 35708 Rennes cedex 7 (FR)
(74) Representative: Plasseraud IP

(57) **Abstract**

A method (60a) for determining assistance information for transmitting an upcoming data packet (j) via a route in a delay tolerant network including at least one contact (C₁-C₄) linking two routing entities (A-E),
the method (60a) comprising:
(S60) obtaining data related to the contact (C₁-C₄),
(S611, S621) obtaining data related to the transmission of a data packet (i, j) among the upcoming data packet (j) and an ongoing data packet (i),
based on at least said data related to the transmission of the data packet, (S612, S624) splitting the contact, said splitting resulting in at least first and second split contact (C₃ₐ, C_{3a*}, C_{3b}, C_{3b*}) linking said two routing entities (A-E),
(S614, S626) determining the assistance information, including at least data related to the first split contact and the second split contact (C₃ₐ, C_{3a*}, C_{3b}, C_{3b*}).

## Description

### Technical Field

This disclosure pertains to the field of communications between distant communication entities and more particularly to communications in the context of Intermittently Connected Networks.

### Background Art

Intermittently Connected Networks (or ICN) are characterized by an intermittent (that is, noncontinuous) end-to-end connectivity. In other words, in such networks, communication entities (or nodes) such as devices, terminals, equipment, satellites, spacecrafts etc. have delimited opportunities to communicate with each other, both in time and in communication paths. For example, connectivity for an Earth-based terminal in a satellite communication network depends on the evolving coverage zones of satellites. In other words, depending on the satellite ephemerides typically, different satellite coverages are available to the terminal throughout time, and connectivity to each satellite is thus referred to as intermittent.

In order to address the specificities of ICN, Delay Tolerant Network (or DTN) architectures have been developed. Such architectures include additional protocol layers enabling communication entities of DTN to operate in a "store, carry, forward" scheme. Indeed, since connectivity between entities of a DTN is intermittent, data packets to be transmitted from a first entity to a second entity are stored by the first entity and transmitted to the second entity when the first and second entities meet (that is, when a connectivity between both entities is available).

A main issue in DTN is then to determine a route (or a path) between a source entity - emitting a data packet - and a destination entity - receiving the data packet - while respecting requirements (e.g., a delivery time). Such route may usually include several hops (or contacts) via intermediate entities before reaching the destination entity. Many routing algorithms exist for determining such route, notably depending on a level of predictability of the network information. Such network information notably includes the connectivity availability between source, intermediate and destination entities and the level of predictability of such availability may for example depend on the predictability of the relative movements between such entities. Indeed, the route(s) to be determined between the source and destination entities may be:
- opportunistic, when the network information is unknown or unexpected,
- probabilistic, when the network information can be determined in a probabilistic way,
- deterministic, when the network information can be pre-determined.

Typically, in the case of non-terrestrial communication networks (satellite communication networks notably), the predictable movements of both satellites and the Earth lead to the application of deterministic routing algorithms. A commonly used deterministic routing algorithm is notably the Contact Graph Routing (or CGR) algorithm. The CGR relies on the Dijkstra shortest path search principle, so as to identify the succession of nodes for routing data packets from the source node to the destination node. In particular, the source-routing CGR (or SR-CGR) determines a route for transmitting a data packet at a source entity, so that each of the succession of nodes uses the already calculated route to transmit the data packet accordingly.

DTN requires the packet routing algorithms to consider several cumulative constraints due to the intermittent nature of connectivity, including congestion management, delivery rate management and buffer management.

The existing CGR and other existing routing algorithms may partially consider such constraints, yet they do it in *ad hoc* solutions, once a route is already planned for transmitting a data packet. For example, in current route search algorithms, once a route is determined for a data packet (e.g., using SR-CGR), such route is executed for transmitting the data packet. During such route execution, both contact capacity issues and buffer capacity issues may occur. For example, when a data packet arrives at a given node for its transmission to a next node and other data packets fully occupy such contact, a contact capacity issue occurs and the data packet is to be buffered at the given node while waiting for an available contact capacity slot. In another example, a data packet may arrive at a given node for its transmission to a next node, yet the contact linking such nodes is not yet existing or the next node may be unexpectedly unavailable. In such case, the data packet is also to be buffered at the given node. Such cases of extended buffering at the given node may cause buffer overflows, for example at the given node. In case of a buffer overflow (i.e., when the buffer of the node is full and cannot store the data packet for further forwarding), the data packet has to be rerouted or even dropped. In other words, existing solutions determine an *a priori* possible route and potential issues encountered when executing such route are attempted to be solved in an *ad hoc* way. Such *ad hoc* adaptation of the initial computed route in existing solutions notably leads to transmission delay, additional resource consumption for re-computation and rerouting, imprecise estimated delivery time, missed delivery time deadline or even lost data packets. Moreover, such potential issues are frequently encountered in existing routing algorithms, since any contact capacity issue, any buffer capacity issue or any missed timing may potentially deviate the data packet routing from its route as scheduled in existing solutions.

### Summary

In a first aspect, it is proposed a method for determining assistance information for transmitting at least one upcoming data packet via a route in a delay tolerant network, said delay tolerant network including at least one contact linking two routing entities of the delay tolerant network, wherein the method comprises at least the following steps:
- obtaining data related to at least said contact,
- obtaining data related to the transmission of at least one data packet among the upcoming data packet and an ongoing data packet,
- based on at least said data related to the transmission of the at least one data packet, splitting the contact, said splitting resulting in at least:
- a first split contact linking said two routing entities, and
- a second split contact linking said two routing entities, said first and second split contacts depending on the contact,
- determining the assistance information, said assistance information including at least data related to the first split contact and the second split contact,
the route selected for transmitting the upcoming data packet (j) depending on said assistance information.

As a consequence, the proposed method enables to provide relevant assistance information for routing an upcoming data packet. In particular, in contrary to existing network information such as a contact plan, the proposed assistance information performs contact splitting for updating initial contacts based on information related to the transmission of data packets (ongoing and/or upcoming). Thus, the proposed assistance information enables to provide accurate and updated assistance information, which takes into account both the routes already computed (and validated) for transmitting ongoing data packets and the conditions of the future transmission of the upcoming data packet.

The proposed method thus enables a more accurate and optimal determination of a route for transmitting the upcoming data packets. Based on such assistance information, which can then be transmitted to the relevant network entities, the proposed method enables to determine routes that are actually viable, given the constraints provided in such assistance information, for transmitting the upcoming data packet to the destination entity, while *a priori* avoiding data packet rerouting or dropping. The proposed method thus enables a better transmission of data packets, enabling more accurate estimated times of arrival of data packets, better management of radio resources and an overall better satisfaction of transmission requirements and QoS.

In contrary to the context of existing route search algorithms - which determine routes and potentially consider *ad hoc* adaptation of the route when an issue occurs (e.g., a buffer overflow, or an available contact) -, the proposed method enables to anticipate issues that may be encountered when transmitting the upcoming data packet (e.g., due to the transmission of another ongoing data packet, or due to the upcoming transmission of the upcoming data packet itself) and considers such transmission in the assistance information to be provided for route searching. Rather than considering *ad hoc* solutions for rerouting or buffering data packets, which generates delays, uncertainty, additional radio resource consumption, the proposed method provides anticipated solutions for determining a sustainable route for transmitting the upcoming data packet.

By assistance information for transmitting an upcoming data packet, it is understood information computed and to be potentially transmitted to entities that determine routes for the upcoming data packet. Such assistance information may rely on existing, predictable, preconfigured and/or known information related to the network (and referred to as initial network information), such as information related to contacts and routing entities (e.g., a contact plan), satellite constellations, intermittent connectivity of the different routing entities etc. However, such assistance information differs from the initial network information in that it further determines (or adds) assistance information, which takes into account the transmission of ongoing data packet and/or of the upcoming data packet itself. Such assistance information notably includes at least split contacts. Such split contacts then differ from the initial contacts, which parameters (e.g., time availability, data capacity) are known via a contact plan for example.

By an upcoming data packet, it is understood a data packet to be transmitted by a source entity at a future time towards a destination entity of the network, and for which no route has been yet definitively computed or selected. An aim of the present disclosure is then to provide relevant assistance information for determining a viable route for transmitting such upcoming data packet, while curbing risks of rerouting, delaying or even dropping such upcoming data packet. The upcoming data packet is characterized by some parameters such as a data packet size, timing and conditions of transmission of such upcoming data packet, requirements for transmitting such data packet for example. Such parameters may be referred to as the data related to the transmission of the upcoming data packet. Based on such parameters, it is possible to determine a hypothetical impact of the transmission of the upcoming data packet on each contact and on each routing entity, would such transmission involve such contact or such routing entity. For example, the data packet size of the upcoming data packet enables to determine the hypothetical buffer occupancy of such upcoming data packet on the buffer of each routing entity, would the upcoming data packet occupy each of such buffers.

By an ongoing data packet, it is understood a data packet for which a route is already computed and/or selected. Such route for transmitting the ongoing data packet may for example have been determined using the route search method as further disclosed in a second aspect of the disclosure, or using any other existing route search algorithm. Since the route for transmitting the ongoing data packet is already validated, such transmission has an actual (i.e., real) impact on the contact and buffer occupancy of the involved contacts and routing entities. In other words, the transmission of the ongoing data packet modifies the availability of the time window and/or data capacity window of the contacts involved in such route, as well as the buffers of the routing entities involved in such route.

By a route in the delay tolerant network, it is understood a succession of contacts (or equivalently, of routing entities) associated with time parameters for transmitting a data packet. In other words, a route for transmitting a data packet may be defined by a list of successive contacts to be used by the data packet and timing for using such contacts (e.g., arrival time and leaving time of each contact). Equivalently, a route may also be defined by a list of successive routing entities to and timing for each routing entity of the list to receive, buffer (or store) and/or transmit (or emit, or forward) the data packet.

By a delay tolerant network, or DTN, it is understood a network architecture adapted to intermittently connected networks. In particular, the intermittent nature of the connectivity in some networks, such as satellite networks, has a minimum level of predictability or is deterministic: network information related to network entities and their connectivity is deterministic or predictable at a high level, so that it may be considered deterministic. The delay tolerant network includes different network entities, which can be understood as entities having a communication unit (e.g., a sensor) and/or processing circuit and being at least partially connected to the network. Such network entities may notably include routing entities (also referred to as nodes), which may be understood as entities that can be involved in the transmission of a data packet. Notably, routing entities are configured to emit, receive, transmit, forward and/or buffer data packets.

By a contact, it is understood a communication channel linking two different routing entities of the network. A contact may be described with a pair of routing entities linked by the contact and a connectivity window linking such pair of routing entities. In particular, the contact is unidirectional, meaning that a contact linking routing entity A to routing entity B is different from a contact linking routing entity B to routing entity A. The connectivity window of a contact may further be described with time parameters, e.g., as a time connectivity window, corresponding to a time opportunity for transmitting data packets via the contact. Thus, two communication channels linking the same pair of routing entities A and B via two distinct connectivity windows form two distinct contacts, representing two distinct time opportunities to transmit data packets from A to B. A contact available during a given time window (defined by two times) represents a connectivity opportunity to transmit data packet via such contact. A connectivity window of a contact may further be described with a data capacity window (also understandable as a transmission rate window), which may be understood as a data volume (per time unit) that can be transmitted by the contact. It is noted that the connectivity window is different from the actual availability of the contact: a contact may be open (i.e., a connectivity opportunity exists) but the contact may be fully used (in part of all of the time window, and/or in part of all of the data capacity) by one or several data packets, so that the transmission of an additional data packet is not possible. In other words, a connectivity window of a contact may exist and span (in time and/or in capacity) but be fully used.

An initial contact is understood as a contact known in the initial network information (e.g., as known in an existing contact plan). The parameters of such initial contact (e.g., its connectivity window) may for example directly depend on the connectivity conditions of each of the routing entities linked by such initial contact. For example, depending on their respective ephemerides, two satellites may be linked by an initial contact having deterministic parameters.

A split contact is understood as a new contact computed in the specific context of the present disclosure. A split contact is obtained after considering a splitting of a given contact (e.g., a splitting of an initial contact or a splitting of an already split contact). The split contact links the two same routing entities as the contact it is split from. However, the time and data capacity of the split contact may differ from the contact it is split from. Indeed, by splitting a contact, it is understood splitting the connectivity window and/or splitting the capacity window of the contact it is split from. Splitting a contact is understood as considering a cut out of at least one portion of the contact, the remaining part(s) of the contact resulting in the split contact(s). In some embodiments, when the cut out portion is at an end (or extremity) of the contact (that is, at an end of the connectivity and/or capacity window), splitting a contact may correspond to shortening the contact, so that splitting a contact results in one split contact.

A contact, without further specification, may thus refer to either an initial contact or a split contact.

By splitting a contact based on data related to the transmission of at least one data packet, it is understood performing the contact splitting depending on such data. More precisely, the portion to be cut out from the contact may be identified depending on such data. For example, when such data corresponds to data related to the transmission of an ongoing data packet, the contact splitting may be performed by considering the portion(s) of the contact occupied by such transmission of the ongoing data packet. In another example, when such data corresponds to data related to the transmission of an upcoming data packet, the contact splitting may be performed by considering the portion(s) of the contact that may lead to issues in transmitting or buffering the upcoming data packet.

In particular, by splitting the contact, it may be understood an actual splitting or a hypothetical splitting. By an actual splitting, it is understood a splitting reflecting an actual, real situation of the contact availability (notably, of the portions of their respective time and/or data capacity windows actually available, given the data packets confirmed to occupy such windows). In other words, the actual splitting enables to align (and update) the time and/or data capacity windows of contacts with their actual availability, given the different known data packet transmissions throughout time. Such actual splitting may for example occur when considering a splitting based on the transmission of an ongoing data packet, which routing is actual, even when such route is not yet executed. By a hypothetical splitting, it is understood a splitting reflecting a hypothetical, theoretical situation of the contacts and the routing entities, by making hypotheses. For example, such hypothetical splitting may occur when considering a splitting based on the transmission of an upcoming data packet, since such transmission has not yet been determined or validated. Thus, an impact on a routing entity buffer or on a contact is determined as a hypothetical information, relevant in case the routing of the upcoming data packet actually involves such contact or such routing entity. As a consequence, split contacts may correspond to actual split contacts or hypothetical split contacts.

Other embodiments of the first aspect of the disclosure may be implemented, possibly in combination with one another:

In an embodiment of the first aspect, splitting the contact includes:
- determining at least one portion of the contact related to said transmission of said at least one data packet,
- splitting the contact by cutting out parts of the contact corresponding to said portion, remaining parts of said contact resulting in said first and second split contacts.

As a consequence, the proposed method enables to determine updated and relevant assistance information regarding contacts available for transmitting the upcoming data packet. Thus, compared to initial contacts as described in an existing contact plan (or more generally in initial network information), the split contacts results in an iterative update of initial contacts, as transmission of data packets are considered and impacts the contacts and their time and/or data capacity availability.

By a portion of a contact, it is understood a part of the time window and/or a part of the data capacity window of the contact.

By a portion of the contact related to the transmission of a data packet, it is understood a portion of interest of the contact impacted by the routing of such data packet. For example, when the data packet is an ongoing data packet, the portion of the contact related to its transmission may correspond to the portion of the contact actually occupied by such routing. In another example, when the data packet is an upcoming data packet, the portion of the contact related to its (upcoming) transmission may correspond to the portion of the contact leading to a problematic issue for transmitting such upcoming data packet, for example, to a portion of the contact leading to buffering the upcoming data packet in an overflowed buffer, that is, leading to a buffering which would cause a buffer overflow at a given routing entity.

By cutting out parts of the contact corresponding to said portion, it is understood identifying parts of the time and/or data capacity windows of the contact related to the transmission of the data packet. Splitting the contact is then understood as excluding such part and keeping the remaining parts so as to form the split contacts.

In an embodiment of the first aspect, said portion is at least one among a time portion and a data capacity portion of the contact, and splitting the contact is at least one among a time splitting and a data capacity splitting respectively.

As a consequence, updating contacts via contact splitting based on data related to the transmission of at least one data packet takes into account both the capacity and timing aspects of contacts of the delay tolerant network. Thus, the proposed contact splitting step enables to precisely delimitate and identify the volume of the contact related to the transmission of a data packet, both in capacity and in time, so as to precisely split the contacts accordingly.

A time and/or a data capacity portion of a contact is defined as a volume of the contact, such volume being formed by time parameters (e.g., a time period) and capacity parameters.

In an embodiment of the first aspect, the data related to the transmission of the ongoing data packet is obtained, said data including at least an ongoing route selected for transmitting the ongoing data packet, and the splitting step is performed for each contact of a succession of contacts used by said ongoing route.

As a consequence, the proposed method advantageously enables to update information about contacts of a delay tolerant network, as such contacts are occupied and released by the transmission of ongoing data packets. The disclosure thus enables to provide assistance information reflecting an up-to-date situation of the actual remaining contact volume available. In particular, such up-to-date assistance information about contacts enables route search algorithms to rely on relevant information to schedule routes for transmitting upcoming data packets. Contact splitting to take ongoing data packets into account thus enables to avoid scheduling transmissions using portions of contacts already occupied by ongoing data packets.

In such embodiment where the data related to the transmission of the ongoing data packet is obtained, the contact splitting performed on such basis is an actual contact splitting, reflecting a real occupation situation of the contacts, since the ongoing data packets are scheduled to occupy specific volumes of specific contacts during specific time periods.

By data related to the transmission of the ongoing data packet, it is understood data enabling to determine the occupation of contact volumes by the ongoing data packet. In particular, such data may include the ongoing route scheduled for transmitting such ongoing data packet. Such ongoing route may be understood as one or a succession of several contacts associated to a volume of occupation of each contact by the ongoing data packet during given periods. Such data related to the transmission of the ongoing data packet may for example be obtained from a network entity determining a route for transmitting the ongoing data packet, after such route being scheduled, selected, determined, computed or validated by such network entity. In particular, such route may not have been executed yet (i.e., the actual transmission of the ongoing data packet may not be ongoing).

In an embodiment of the first aspect, the data related to transmission of the upcoming data packet is obtained, said data including at least parameters specific to the upcoming data packet, and the splitting step is a hypothetical splitting step, said hypothetical splitting step being performed for at least one contact depending at least on said parameters specific to the upcoming data packet.

As a consequence, the proposed method also advantageously enables to take into account hypothetical scenarios of transmission of the upcoming data packet and how such hypothetical scenarios of transmission would affect the delay tolerant network (e.g., the routing entities, the contacts linking such routing entities). Thus, the proposed method enables to take into account the impact of transmitting upcoming data packets via the network, before any route being even scheduled, selected, determined, computed or validated for transmitting such upcoming data packet. In particular, based on such hypothetical splitting step, the proposed method enables to provide or adapt the assistance information, related at least to the contacts, according to the impact of such hypothetical transmission, so that the route search process for transmitting such upcoming data packet may take such impact into account when actually determining the route for transmitting the upcoming data packet.

In particular, the hypothetical splitting step may be performed so as to avoid problematic issues in the network identified by hypothetical scenarios of transmission of the upcoming data packet. Such problematic issue may for example be identified based on parameters specific to the upcoming data packet. For example, considering a size of the upcoming data packet, a problematic issue may be identified when the predefined maximum buffer occupancy of one or several routing entities would be exceeded (at least during a problematic time period) if receiving such upcoming data packet. *De facto,* such problematic issue may be identified when specific contacts linking routing entities lead to buffering (or storing) the upcoming data packet at such routing entities during such problematic time period. Thus, the hypothetical splitting step may for example enable to target such specific contacts to avoid buffering at such routing entities, thus, to avoid problematic issues such as buffer overflows.

By a hypothetical splitting step, it may be understood considering a virtual, hypothetical split of at least one contact (either initial or already split), specifically associated to an upcoming data packet and to a routing entity concerned by a problematic issue (e.g., a buffer overflow). In particular, such hypothetical splitting step is not a real, actual updated knowledge of a real situation of the delay tolerant network, but is a virtual and temporary update, specific to and conditioned by the transmission of the upcoming data packet (which is not yet scheduled). Such splitting is notably referred to as hypothetical because it is virtual: the contacts being actually (really) split as previously described only when a route will actually be scheduled for the upcoming data packet. In practice, the hypothetical splitting step may be performed similarly to an actual splitting step (i.e., by cutting out parts of the contacts and by considering remaining split contacts) but may be stored (e.g., in a memory unit of the first network entity, notably in a volatile memory unit) temporarily, for example until a route for transmitting the upcoming data packet is scheduled.

By a contact (hypothetically) split depending on at least parameters specific to the upcoming data packet, it may be understood a contact (either initial or split) identified as leading to a problematic issue in the network due the transmission of the upcoming data packet. Such problematic issue may for example correspond to a (hypothetical) buffer overflow at one routing entity at least. In such case, all contacts leading to the (hypothetical) buffer overflow may be understood as contacts leading to buffering the upcoming data packet during the (hypothetical) buffer overflow. For example, if a (hypothetical) buffer overflow is identified at a given routing entity (referred to as overflowed routing entity), during a delimited time period (referred to as problematic time period), all contacts starting at any routing entity leading to the overflowed routing entity and having a time connectivity window overlapping the problematic time period may be split with a hypothetical splitting step.

In an embodiment of the first aspect, the method further includes: determining a buffer table comprising, for each routing entity of the delay tolerant network, a time-dependent value related to a buffer occupancy of said routing entity, and the assistance information further includes data related to said buffer table.

As a consequence, the proposed method further enables to provide assistance information taking into account the buffers of the respective routing entities of the network. In particular, by providing such information, the route search may determine routes for transmitting data packets while having knowledge about for example the predefined maximum buffer occupancy of each routing entity, a current and future buffer occupation of each routing entity, potential real or hypothetical buffer overflows and/or hypothetical buffer occupation of each routing entity. In particular, the data related to the buffer table may thus include updated information about the buffer table, for example as data packets are scheduled to arrive or leave some buffers at scheduled times and to be stored at some buffers for scheduled time periods.

By a buffer table, it is understood an ensemble of time-dependent values reflecting a time-dependent state of buffers of routing entities of the delay tolerant network. A buffer table may take the form of a list or a table of such time-dependent values. The time-dependent values may for example correspond to a level, rate, ratio, percentage of occupancy or of availability of each of the buffers taking the occupancy by data packets into account. A particular buffer table may be an initial buffer table, corresponding to values before any data packet is buffered in the routing entity buffers.

The values of the buffer table are time-dependent in that they may be updated when a route is scheduled for transmitting an ongoing data packet. For example, when an ongoing data packet is scheduled to be transmitted via successive routing entities at given times (i.e., via contacts linking such routing entities), the buffer table values may be updated to reflect the occupancy of each of the respective buffers for delimited time periods. Such update of the buffer table values may be scheduled as soon as the ongoing data packet is scheduled for transmitting, even before its actual transmission or presence in the buffer(s).

The values of the buffer table may also be virtually updated as an upcoming data packet is identified. Even when no route for transmitting such upcoming data packet is yet identified, the buffer table values may be virtually updated so as to test whether the maximum buffer occupancy of any buffer would be exceeded or not, and thus avoiding potential buffer overflows by preventing buffering in such routing entities. Such virtually-updated values may also be time-dependent, for example as the buffer table is (virtually) updated depending on the time requirements for transmitting the upcoming data packet. The buffer occupancy of all routing entities may for example be assessed (and their occupancy values be virtually updated) for a time period corresponding to a possible time period during which the upcoming data packet may occupy such buffers (e.g., at most, starting from the emission time of the upcoming data packet, and at last at its maximum arrival time or at the packet expiry time).

By data related to the buffer table, it may be understood any data enabling to obtain the time-dependent values of the buffer table.

In an embodiment of the first aspect, the method further includes: based on at least said data related to the transmission of the at least one data packet, updating the buffer table,
and the assistance information further includes data related to said updated buffer table.

As a consequence, the assistance information includes updated values of the buffer table, such updated values being determined as data packets are scheduled for transmission via the network. For example, by updating the buffer table, it is possible to include in the assistance information:
- updated time-dependent values of the buffer table based on scheduled routes for transmitting ongoing data packets, and
- virtual values of the buffer table based on upcoming data packets to be transmitted.

In an embodiment of the first aspect, the data related to the transmission of the ongoing data packet is obtained, said data including at least an ongoing route selected for transmitting the ongoing data packet,
and updating the buffer table is performed for each routing entity involved in said ongoing route.

As a consequence and as aforementioned, updating the buffer table enables to take into account the impact of scheduled routes for transmitting ongoing data packets on the buffer table. The update of the buffer table may include a combination of:
- a buffer occupancy or availability value update, as an ongoing data packet occupies a given buffer capacity of a routing entity, depending on the size of the ongoing data packet,
- a time update, as an ongoing data packet is scheduled to occupy some routing entity buffers for scheduled time periods.

In an embodiment of the first aspect, the data related to the transmission of the upcoming data packet is obtained, and the updating step is a hypothetical update of the buffer table and further includes:
determining the updated buffer table as a hypothetical buffer table corresponding to a hypothetical update of the buffer table with, for each routing entity, a hypothetical update of the time-dependent value based on a hypothetical buffer occupancy of said routing entity due to the upcoming data packet.

As a consequence, and as aforementioned, hypothetically updating the buffer table also enables to predict and take into account the potential impact of upcoming data packets on the buffers of routing entities, based on data related to the transmission of the upcoming data packet, for example their sizes. In particular, such hypothetical buffer table enables to take into account transmission of data packets even before a route is scheduled for their transmission. The hypothetical buffer table enables to identify potential problematic issues at any buffer due to the transmission of the upcoming data packet. Such hypothetical buffer table thus enables to orientate the route search for the upcoming data packet so as to avoid such identified problematic issues.

By a hypothetical buffer table, it is understood a buffer table containing hypothetical buffer values which are virtually updated to take into account features of an upcoming data packet. In particular, such hypothetical buffer table does not reflect a real, actual situation of the routing entities buffers, but reflects a virtual, possible state of such buffers, would such buffers be involved in the transmission of the upcoming data packet. In particular, a hypothetical buffer table is associated to a specific upcoming data packet. In particular, the hypothetical buffer table may enable to identify potential buffer overflows at some routing entity buffers. To that end, the hypothetical buffer may represent a "worst case" situation, in which the size of the upcoming data packet is (virtually) added to the buffer occupancy values of all routing entity buffers, for all time periods, so as to identify buffers and time periods which would correspond to a buffer overflow.

In an embodiment of the first aspect, the method further comprises, based on the hypothetical buffer table:
- identifying at least one hypothetical buffer overflow related to a hypothetical buffer occupancy of an overflowed routing entity exceeding a predefined maximum buffer occupancy of said overflowed routing entity,
and the assistance information further includes data related to said at least one hypothetical buffer overflow. In particular, said data related to the said at least one hypothetical buffer overflow is temporarily included in the assistance information, for example until such assistance information is transmitted for a route search for the upcoming data packet, or until the expiration of a preconfigured time period.

As a consequence, the proposed method advantageously enables to take into account data related to the transmission of the upcoming data packet for identifying potential problematic issues at given routing entity buffers, such problematic issues corresponding to potential hypothetical buffer overflows due to the transmission of the upcoming data packet. Thus, the proposed assistance information enables to provide hypothetical information about the impact of upcoming data packets on routing entity buffers, even when no route for transmitting such packets is yet scheduled. Such assistance information thus enables to improve the route search for such upcoming data packets and avoid package rerouting or dropping, as potential buffer overflows are identified in the assistance information and may be avoided.

By a hypothetical buffer overflow, it is understood a potential buffer overflow identified at a given routing entity, would the upcoming data packet be transmitted via such routing entity. Such potential buffer overflow is associated to a given upcoming data packet, a given routing entity and a delimited time period. In particular, such buffer overflow is referred to as hypothetical, because the buffer overflow has not yet occurred (e.g., the predefined maximum buffer occupancy of such routing entity has been reached or not, but is not yet exceeded) but would occur if the upcoming data packet is actually scheduled to be transmitted via such routing entity at a given time period.

By an overflowed routing entity, it is understood a routing entity at which a hypothetical buffer overflow is identified for at least a delimited time period.

Many overflowed routing entities may be identified for one upcoming data packet (e.g., if storing such upcoming data packet would cause a buffer overflow at many routing entities) and one or many hypothetical buffer overflows may be identified for one routing entity (e.g., if several buffer overflows are identified for distinct time periods).

By a hypothetical buffer occupancy, it is understood a value reflecting a virtual occupancy of a routing entity buffer, would the upcoming data packet occupy such buffer. In particular, such buffer occupancy is hypothetical (or virtual), since no route for transmitting the upcoming data packet is yet scheduled: the buffer is neither really occupied by the upcoming data packet, nor scheduled to be at this stage.

For example, the hypothetical buffer occupancy could be determined by taking into account a size of the upcoming data packet to the buffer occupancy value of all routing entities at all time periods, so as to identify possible overflowed routing entities and corresponding one or several time periods associated to one or several hypothetical buffer overflows. In another example, the routing entities and time periods for which the size of the upcoming data packet is taken into account may be selectively considered, based for example on parameters related to the transmission of the upcoming data packet.

In an embodiment of the first aspect, the hypothetical splitting step is performed for the at least one contact involving the overflowed routing entity.

As a consequence, the identification of hypothetical buffer overflows may directly be reflected and exploited in the assistance information by performing a hypothetical splitting on contacts leading to such hypothetical buffer overflows.

The hypothetical splitting step may thus enable to cut out portions of the contacts which would lead to the buffering of data packets during the hypothetical buffer overflow. In particular, such cutout portion does not reflect a portion actually occupied by a data packet (i.e., such portion may be available for transmitting a data packet) but is still cut out so as to avoid transmitting data packets to an overflowed routing entity during a problematic time period.

By a contact involving the overflowed routing entity, it is understood a contact, either initial or already split, arriving at the overflowed routing entity. In other words, such contact may contribute to increase the buffer occupancy value of the overflowed routing entity. In particular, the hypothetical contact splitting may be performed so as to avoid the possibility to use the contact for storing data packets at the overflowed routing entity during the hypothetical buffer overflow. Thus, the hypothetical splitting step may be performed on contacts leading to store data packets during the time period corresponding to the buffer overflow.

In an embodiment of the first aspect, the method further comprises: - based on the hypothetical splitting step, identifying at least one hypothetical contact incompatibility, said hypothetical contact incompatibility corresponding to a consecutiveness of contacts leading to the at least one hypothetical buffer overflow,
and the assistance information further includes data related to said at least one hypothetical contact incompatibility.

As a consequence, the proposed method enables to include further assistance information so as to avoid buffer overflows at some routing entities (i.e., the overflowed routing entities) due to any upcoming data packet. Indeed, the hypothetical splitting step enables to avoid having contacts directly leading to storing data packets during the time period corresponding to the hypothetical buffer overflow, yet such hypothetical splitting does not prevent from having data packets arriving at the routing entity before the buffer overflow and remaining during the latter.

Indeed, as an example, a first contact linking routing entities A and B may have a time connectivity window ending before the start time of a hypothetical buffer overflow identified at routing entity B. Thus, such first contact will not be hypothetically split according to the previously described aspect and a data packet may be transmitted via such first contact to routing entity B. A second contact linking routing entities B and C may have a time connectivity window starting after the end time of the hypothetical buffer overflow. Thus, such second contact will not be hypothetically split according to the previously described aspect and a data packet may be transmitted via such second contact from routing entity B to routing entity C. Yet, if a route for transmitting the data packet is scheduled via the first contact successively followed by the second contact, the data packet will remain at the buffer of routing entity B in the meantime, leading to the hypothetical buffer overflow. Thus, the hypothetical contact incompatibility enables to identify such problematic consecutiveness between contacts, as such consecutive contacts would lead to the hypothetical buffer overflow.

By data related to said at least one hypothetical contact incompatibility, it is understood data identifying contacts and/or contact consecutiveness to be avoided to prevent a hypothetical buffer overflow. Such data may be associated to a given hypothetical buffer overflow.

Advantageously, based on such assistance information, which is specific to the upcoming data packet, a route search algorithm may determine a route for transmitting an upcoming data packet while actually avoiding buffer overflows that would be caused by such upcoming data packet at some routing entities. Moreover, the proposed method enables to optimize the route search in that contacts are not over-split and contact incompatibilities are not over-considered. For example, not all consecutive contacts involving the overflowed routing entities are forbidden and not all contacts strictly arriving at the overflowed routing entities are forbidden (e.g., contacts ending before the start time of the hypothetical buffer overflow and/or beginning after the end time of the hypothetical buffer overflow are still kept as potential candidate contacts to be used for determining the optimal route), such contacts and contact consecutiveness being only identified and potentially constrained to strictly avoid such buffer overflows, considering their timing.

In an embodiment, the method further includes transmitting the assistance information, as described according to one or several of the previous embodiments, to at least a second network entity configured to perform a route search method for selecting a route for transmitting at least one upcoming data packet.

By a second network entity, it is generically referred to any network entity of the delay tolerant network configured to determine at least one route for transmitting at least one data packet. In other words, a second network entity is understood as an entity configured to perform a route search algorithm. In the context of the present disclosure, it may be distinguished second network entities configured to determine a route for transmitting any data packet and at least one second network entity configured to determine a route for transmitting the specific upcoming data packet.

In such embodiment, the transmission of the assistance information may be a selective transmission so that assistance information related to contact splitting and/or buffer table is transmitted to all second network entities configured to determine a route for transmitting any data packet, while assistance information related to hypothetical contact splitting, hypothetical buffer table, hypothetical buffer overflows, overflowed routing entities and/or hypothetical contact incompatibilities is specifically transmitted to the at least one second network entity configured to determine a route for transmitting the specific upcoming data packet. Moreover, the selective transmission of the assistance information may further include transmitting assistance information related to buffer margins and/or contact margins to routing entities configured to reroute data packets. Such selective transmission of the assistance information may for example be enabled by knowledge contained in the network information related to data packets to be transmitted by second network entities.

In a second aspect, it is proposed a route search method for selecting a route for transmitting at least one upcoming data packet in the delay tolerant network,
said delay tolerant network including at least one contact linking two routing entities of the delay tolerant network,
wherein said route searching method comprises at least steps of:
obtaining data related to the upcoming data packet to be transmitted,
receiving assistance information, said assistance information including at least data related to a first split contact linking said two routing entities and a second split contact linking said two routing entities, said first and second split contacts resulting from a splitting of the contact based on at least data related to the transmission of at least one data packet among the upcoming data packet and an ongoing data packet,
based on at least said assistance information, selecting the route for transmitting the upcoming data packet.

As a consequence, the present disclosure proposes a method for determining, validating, selecting, scheduling, finding an optimal route for transmitting an upcoming data packet via the network, by advantageously using the assistance information as determined according to the first aspect. Notably, the proposed route search method relies on split contacts (e.g, real split contacts or hypothetical split contacts, as previously defined) so as to take into account the transmission of data packets, such data packets being ongoing data packets and/or upcoming data packets for which no route has been scheduled yet.

In particular, such route search method enables to determine an optimal route, as some contacts are selectively split, and not simply discarded, when determining the assistance information. The route search algorithm for the upcoming data packet may thus rely on all portions of all contacts actually available given the ongoing data packets and/or compatible with the transmission of the upcoming data packet.

Moreover, such route search method enables to determine a sustainable route to avoid package rerouting and/or dropping, based on available and updated knowledge about packet transmissions in the network.

In an embodiment of the second aspect, the assistance information further includes packet-generic assistance information, said packet-generic assistance information comprising at least one among:
- the data related to at least the first and second split contacts resulting from the splitting of the contact based on at least data related to the transmission of the ongoing data packet,
- data related to a buffer table comprising, for each routing entity of the delay tolerant network, a time-dependent value related to a buffer occupancy of said routing entity,
- data related to an update of said buffer table based on at least said data related to the transmission of the ongoing data packet.

As a consequence, the proposed route search method advantageously relies on assistance information reflecting a real, actual, updated situation of the network. Such packet-generic assistance information is notably accurate and relevant for determining a route regardless of the upcoming data packet to be transmitted. Indeed, the proposed method relies at least on assistance information updated based on ongoing data packets, for which a route has already been validated and scheduled. Thus, the impact of such route on contacts and routing entity buffers is accurately identified. For example, the contact occupancy and the buffer occupancy (both in capacity and in time) of each ongoing data packet is identified and reflected in the packet-generic assistance information. In that way, the route search method may determine an accurate and sustainable route which is aware of the portions or parts of the contacts and/or buffers already occupied by other ongoing data packets.

By packet-generic assistance information, it is understood information enabling the route search method to determine a route for transmitting any upcoming data packet, regardless of the specific parameters of such upcoming data packet. In other words, such packet-generic assistance information is relevant and applies to any upcoming data packet to be transmitted, and may be used by any network entity configured to determine a route for transmitting a data packet.

In an embodiment of the second aspect, the assistance information further includes packet-specific assistance information, said packet-specific assistance information being specific to the upcoming data packet and comprising at least one among:
- data related to a hypothetical buffer table including, for each routing entity, a hypothetical time-dependent value based on a hypothetical buffer occupancy of said routing entity due to the upcoming data packet,
- data related to at least one hypothetical buffer overflow related to a hypothetical buffer occupancy of an overflowed routing entity exceeding a predefined maximum buffer occupancy of said overflowed routing entity,
- the data related to at least the first and second split contacts resulting from the splitting of the contact corresponding to a hypothetical splitting based on at least data related to the transmission of the upcoming data packet,
- data related to at least one hypothetical contact incompatibility corresponding to a consecutiveness of the contacts and/or split contacts leading to the at least one hypothetical buffer overflow.

As a consequence, the proposed route search method advantageously relies on assistance information providing a virtual scenario of the network, wherein the upcoming data packet is transmitted and affects the contacts and routing entities of the network. In other words, the packet-specific assistance information enables the route search method to rely on virtual, hypothetical information, which is specific to the upcoming data packet, so as to better determine an optimal route for transmitting such upcoming data packet without leading to problematic issues in the network.

By packet-specific assistance information, it is understood hypothetical assistance information reflecting a virtual, hypothetical situation of the network, would the upcoming data packet (considering its specific parameters) be transmitted and affect the contacts and routing entities of the network. For example, such upcoming data packet may affect the buffer occupancy values (i.e., the buffer table) of routing entities, depending on its size. Such impact is reflected in a hypothetical buffer table included in the packet-specific assistance information. In particular, the packet-specific assistance information is to be used as preventive assistance information, so as to identify problematic scenarios and avoid routes formed by successions of contacts leading to such scenarios.

In an embodiment of the second aspect, the route search method further includes, based on the packet-generic and the packet-specific assistance information:
- determining at least first and second split contacts, corresponding to hypothetical first and second split contacts, by a hypothetical splitting of the at least one contact which includes cutting out a portion of the contact related to said hypothetical buffer overflow,
- identifying the at least one hypothetical contact incompatibility,
and the route for transmitting the upcoming data packet is further selected based on said at least one hypothetical contact incompatibility.

As a consequence, the proposed route search method further enables to use the received assistance information so as to identify problematic issues in the network, and to incorporate such knowledge into the route search. Thus, in such embodiment, the provided assistance information may contain packet-generic assistance information and only a part of packet-specific assistance information (e.g., hypothetical buffer table, hypothetical buffer overflow) and the entity configured to perform the route search method may directly compute information such as split contacts and hypothetical contact incompatibilities on such basis. Thus, major part of the packet-specific assistance information may be selectively computed directly by the entities requiring such information.

In another aspect, it is also proposed a network entity connected to a delay tolerant network and comprising at least one processing unit configured for performing at least one among:
- at least part of the method according to the proposed first aspect, and
- at least part of the route search method according to the proposed second aspect.

By a network entity, it is understood a device, an apparatus or a system connected to the delay tolerant network. Such network entity may be terrestrial (e.g., an Earth station) or non-terrestrial (e.g., a satellite, an onboard base station). The network entity may communicate with at least routing entities and/or other network entities (e.g., the core network).

In particular, the network entity performing the method according to the proposed first aspect may be a first network entity configured to determine, store, update assistance information and to transmit such assistance information to a plurality of routing entities, via broadcast, groupcast or unicast transmissions. Such first network entity may also communicate with core network entities and routing entities.

In particular, the network entity performing the method according to the proposed second aspect may be a second network entity configured to determine, schedule, compute, select, validate a route for transmitting data packets. The network may include a plurality of first network entities. Such first network entity may for example correspond to a source entity configured to emit a data packet, and may thus be configured to determine a route for transmitting such data packet.

In another aspect, it is also proposed a computer software comprising instructions to implement at least one among:
- at least part of a method according to the proposed first aspect, when the software is executed by a first processing unit, and
- at least part of the route search method according to the proposed second aspect, when the software is executed by a second processing unit.

In another aspect, it is also proposed a computer-readable non-transient recording medium on which a software is registered to implement at least one among:
- at least part of a method according to the proposed first aspect, when the software is executed by a first processing unit, and
- at least part of the route search method according to the proposed second aspect, when the software is executed by a second processing unit.

### Brief Description of Drawings

Other features, details and advantages will be shown in the following detailed description and on the figures, on which:
**Fig. 1**

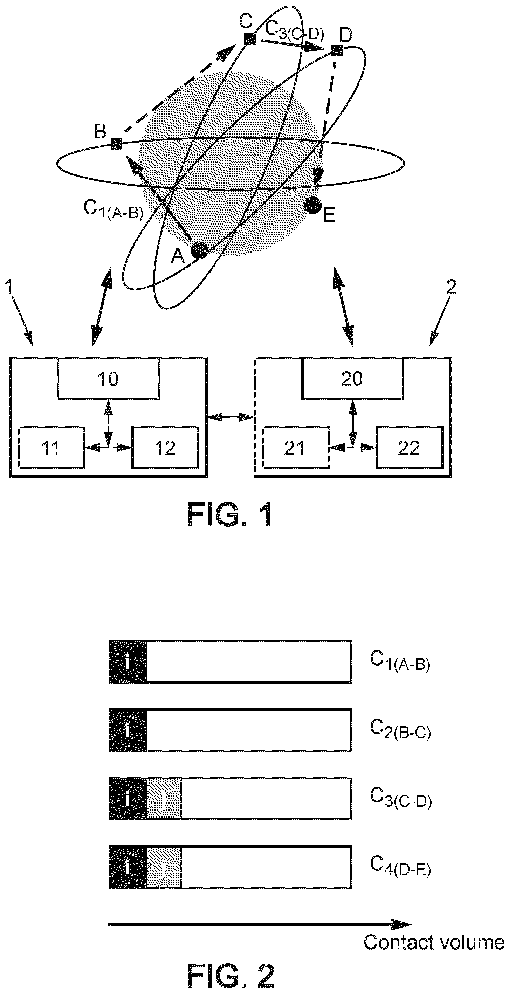

   [Fig. 1] is a schematic representation of a delay tolerant network according to an embodiment.
**Fig. 2**
   [Fig. 2] is a schematic representation of volumes of contacts between entities according to prior art.
**Fig. 3**

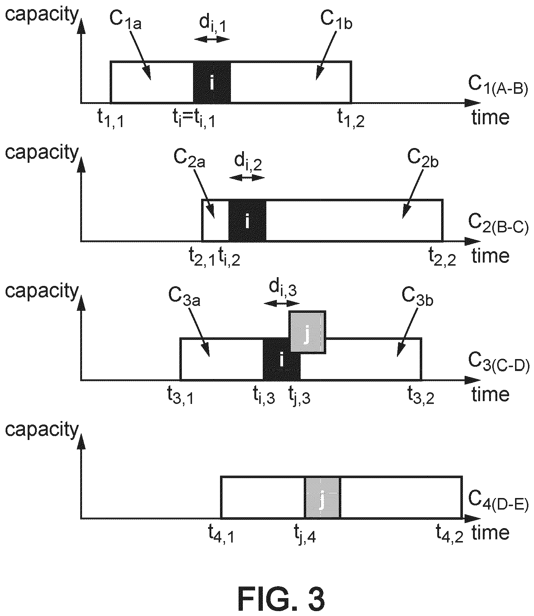

   [Fig. 3] is a schematic representation of contacts between entities according to an embodiment.
**Fig. 4**

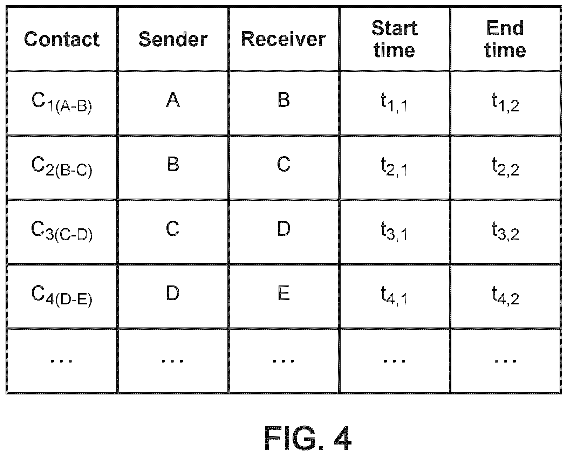

   [Fig. 4] is an example of a contact plan according to an embodiment.
**Fig. 5**

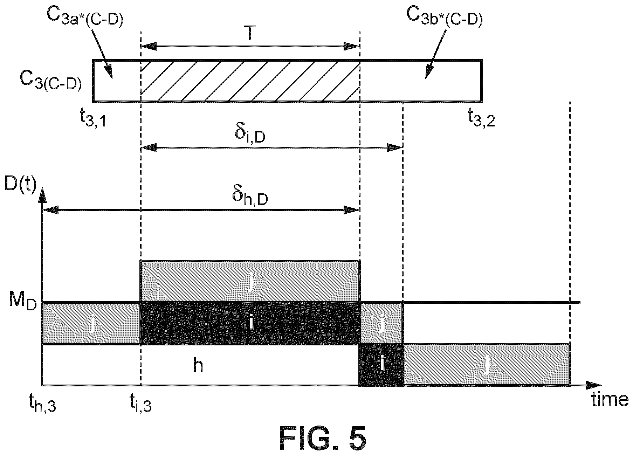

   [Fig. 5] is a schematic representation of a node buffer occupancy according to an embodiment.
**Fig. 6**

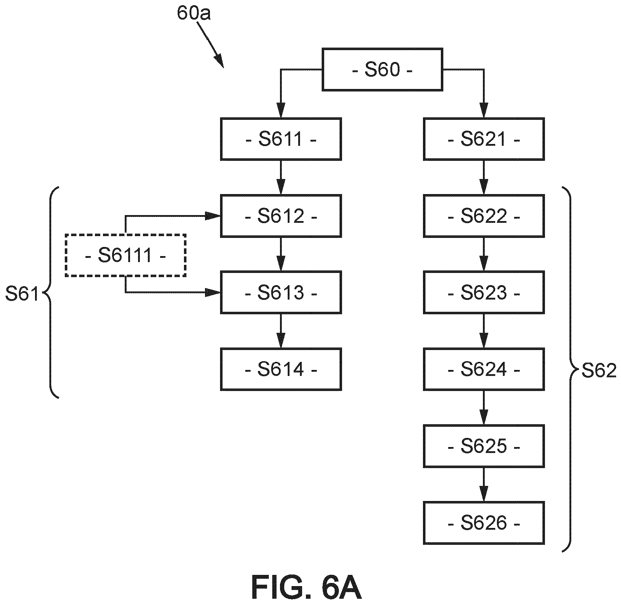

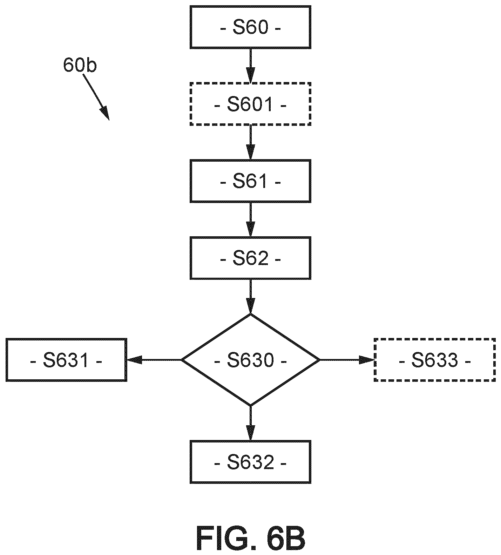

   [Fig. 6A] and [Fig. 6B] are flowcharts representing steps of a method for determining assistance information according to several possible embodiments.
**Fig. 7**

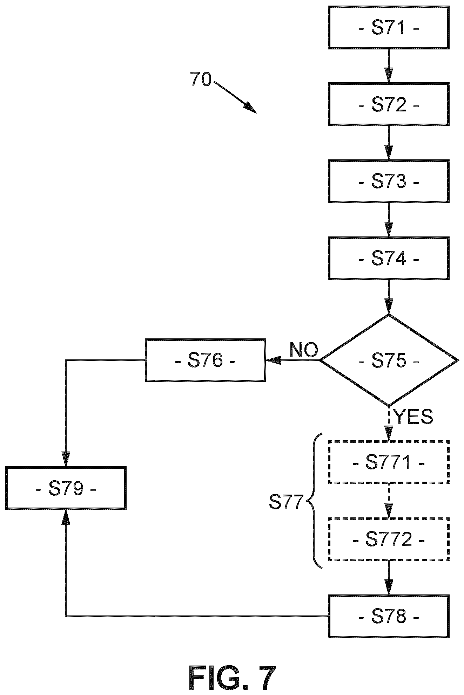

   [Fig. 7] is a flowchart representing steps of a route search method according to an embodiment.

The step order in figures illustrating methods proposed in the present disclosure is provided as an example and is in no way limiting.

Unless explicitly stated otherwise, the several possible embodiments of a same method could be performed in combination, in a concomitant or successive way.

### Description of Embodiments

Referring to figure 1, a schematic example of a delay tolerant network applied to distant communications is represented. The network represented on figure 1 may for example correspond to a satellite communication network, which architecture integrates a delay tolerant network acting as an overlay on an existing satellite network. In the rest of the present disclosure, such network applied to satellite communications will be referred to as the delay tolerant network, or more simply as the network. The network represented on figure 1 includes at least a plurality of routing entities A, B, C, D, E (or A-E), also referred to as nodes of the network. Each routing entity may correspond to any entity configured or adapted to receive, store and/or transmit messages in the network. For example, the routing entities A-E may be satellites, access points, gateways, Earth stations, base stations, terminals, user equipment, routers, aircrafts, and/or spacecrafts. The routing entities A-E are connected, at least temporarily, to the network, so that transmissions from, to and/or between the routing entities A-E are managed by the network and rely on radio resources allocated in frequency bands configured for such routing entities A-E. For example, the radio resources may be shared according to a frequency division scheme (e.g., FDM, OFDM), a time division scheme (e.g., TDM), a code division scheme (e.g., CDM), a polarization multiplexing or a combination thereof.

In particular, in the context of the delay tolerant network, the connectivity of the routing entities A-E to the network may be intermittent. In other words, transmission from and/or to a given routing entity A-E is not possible at all times, for example due to configured interruptions of connection, movements of the routing entity A-E or a resource management scheme by the network. Moreover, such intermittent connectivity may be predictable, for example when it is preconfigured or more generally when the connectivity relies on predictable information. For instance, in the case of routing entities A-E involving satellites (e.g., satellites deployed in a LEO, MEO or GEO context), satellite ephemerides and almanacs are preconfigured information, so that the network has predictable knowledge about the movements of satellites as well as their evolving cell and coverage zone positions. Thus, for a user equipment on Earth (which location may be considered unmoving, notably when the Earth movement is considered neglectable with respect to the (non-geosynchronous) satellite movements), the connectivity to satellites is intermittent (due to the movement of satellites and thus of the coverage zones (e.g., cells, in the case of cellular communications) potentially covering the location of Earth-based equipment (e.g., user equipment)). Such intermittent connection is yet predictable, since the known satellite ephemerides and almanacs enable to predict when and where coverage zones will be located (and thus when the location of the user equipment will be covered).

More generally, in the context of the present disclosure, information related to the network may be deterministic, or at least probabilistic. Such well-known information may be referred to as (initial) network information.

Such network information may notably include data related to the routing entities A-E. For example, such data related to the routing entities A-E may be: a list identifying the routing entities A-E, nature of the routing entities A-E (e.g., a satellite, an access point, a gateway, a user equipment), information about the power transmission, storage capacity or more generally about the capabilities of the routing entities A-E (e.g., buffer information such as a maximum buffer occupancy of each routing entity A-E). Referring to figure 1 as an example, the delay tolerant network includes five routing entities A-E configured for emitting, forwarding and/or receiving data packets via the delay tolerant network. In particular, routing entities A and E correspond to user equipment and routing entities B, C and D correspond to satellite constellations.

The network information may also include data related to the communication channels directly linking such routing entities A-E, referred to as contacts between routing entities A-E. For example, data related to such contacts may be: a list identifying contacts existing between two routing entities A-E, parameters characterizing such contacts, such as data capacity parameters, time availability parameters, service requirements and data prioritization on such contacts for example. Referring to figure 1 as an example of a situation of the network at a specific representation time, parts of contacts C_{1(A-B),} C_{3(C-D)} are represented in full-line arrows (more simply noted C₁, C₃) and link routing entities A to B and C to D respectively. In the context of a delay tolerant network at such specific representation time, such contacts C₁, C₃ represent an opportunistic (or intermittent) communication link available between two routing entities A-E to transmit data packets between such respective routing entities A-E at such specific representation time. In other words, at the time represented on figure 1, there is *a priori* an opportunity for routing entity A (respectively C) to transmit data packets to routing entity B (respectively D), providing the parameters or capabilities of routing entities or contacts. Figure 1 also illustrates arrows in dotted lines, as represented between routing entities B and C, and D and E, which represent the absence of contact (that is, of a communication opportunity) between such routing entities at the representation time considered on figure 1. In other words, at the time represented on figure 1, there is no opportunity for routing entity B (respectively D) to transmit data packets to routing entity C (respectively E), since no contact is existing at that time. Representations of the network of figure 1 at different times may illustrate different contact opportunities between routing entities A-E. For example, at a different time (not represented on figure 1 but represented on figures 2 and 3), a contact C_{2(B-C)} (more simply noted C₂) may be existing between routing entities B and C and a contact C_{4(D-E)} (more simply noted C₄) may be existing between routing entities D and E (e.g., due to a relative movement of routing entity B, C, D and/or E, leading to a communication opportunity becoming available between the respective two pairs). It is also noted that no arrow links routing entities A and E, meaning that routing entity A cannot transmit data packets directly to routing entity E (whatever the time considered). Thus, a data packet routing between routing entities A and E requires a routing via intermediate routing entities (e.g., A, B, C, D). Moreover, a considered contact (e.g., C₁) is defined from a routing entity (e.g., A) to another (e.g., B), in such order. The inverse transmission (e.g., B to A) would be defined as a distinct contact, which could be possible or not, and which could have different time and capacity properties with respect to the considered contact. Two communication opportunities between two same routing entities (in the same direction) having different time properties (i.e., different time connectivity windows) define two distinct contacts between the routing entities.

The network information may also include any other relevant information related to the network and broadcasted, groupcasted or unicasted to routing entities connected to the network, such as network access information, synchronization information.

The network information may be broadcasted to all or part of the routing entities A-E of the network by the core network or any other network entity.

In the context of delay tolerant networks, existing algorithms rely on such network information to determine (or search) a route for transmitting data packets from a source entity to a destination entity. Such route may be defined by a succession of contacts (and thus, a succession of routing entities) via which data packets are successively forwarded until reaching its destination. One of the commonly used route search algorithms is the Contact Graph Routing (or CGR). Such CGR algorithm may notably rely on network information under the form of a Contact Plan (or CP), as illustrated on figure 4. Such contact plan notably includes data related to contacts linking routing entities A-E, based on which the CGR algorithm may determine the shortest path (based on the Dijkstra principle) for transmitting a data packet.

However, the existing route search algorithms solely rely on network information determined based on predictable knowledge about the network as previously described, such as the contact plan. In particular, the timing and capability aspects related to both the routing entities and the contacts linking such routing entities - notably their dynamic nature, as ongoing data packets are transmitted and temporarily occupy such contacts and routing entities - are not taken into consideration in such existing route search algorithms.

Typically, figure 2 schematizes an example of initial network information considered for determining a route for transmitting data packets in existing route search algorithms. For route searching ends, contacts C₁-C₄ in the network are often considered as intermittent communication links, with decreasing data capacity (or transmission rate) as ongoing data packets are transmitted via such contacts C₁-C₄. For example, a route determined for transmitting ongoing data packet i passes via contacts C₁, C₂, C₃ and C₄ and thus occupies a portion of the contact volume of such contacts, as schematized on figure 2. When searching for a route for transmitting an upcoming data packet j, existing route search algorithms usually consider the remaining contact volume of such contacts C₁-C₄ and contacts with a non-null remaining contact volume are considered when performing the route search algorithm. Referring to figure 2, upcoming data packet j requires a route for transmission from routing entity C to routing entity E. Based on the available contact volume remaining in contacts C₃ and C₄, existing route search algorithms will usually determine a route for transmitting upcoming data packet j based on C₃ and C₄.

However, such representation of the initial network information used by existing route search algorithms does not enable an accurate and optimal route search. Indeed, such representation does not take either the contact timing aspects with respect to the packet timing aspects (e.g., times of arrival and/or departure of data packets from contacts with respect to times at which contact opportunities exist or not, times at which contacts exist and are occupied or not, available or not etc.) or the node buffering aspects into account, both evolving as data packets are transmitted. Indeed, such aspects are respectively illustrated as examples on figures 3 and 5. Referring to figure 3, contacts C₁-C₄ are represented as both time-dependent (horizontal coordinates) and capacity-dependent (vertical coordinates) communication links. The maximum capacity of a contact C₁-C₄ is considered to be constant and the contact time availability for a contact Cₙ (n being between 1 and 4 in the described example) spans between times t_{n,1} and t_{n,2}. Such time interval representing the time availability of each contact is referred to as an initial connectivity window t_{n,1}-t_{n,2}. Thus, in the context of the present disclosure, the transmission of an ongoing data packet i impacts a contact during a considered and delimited timing, and thus occupies a given volume in each contact C₁-C₄ of its route, defined both in capacity and in time.

For the sake of simplicity, the example of figure 3 and the rest of the disclosure will focus on the time aspect of contacts C₁-C₄ and a data packet i, j occupying a contact C₁-C₄ is considered to occupy, at a given time, the full capacity of such contact C₁-C₄ (e.g., for contact C₁, at time ti and during its transmission via C₁, the ongoing data packet i occupies the full capacity of contact C₁, i.e., the full vertical size of the contact C₁). In other embodiments, such data capacity is not fully occupied.

Referring to figure 3, the transmission of ongoing data packet i (for example from a source entity corresponding to routing entity A to a destination entity corresponding to routing entity D) leads to occupying contacts C₁, C₂ and C₃, according to a route determined by a given route search algorithm (e.g., the route search method 70 which will be further described according to the present disclosure, the CGR or another existing route search algorithm). In particular, such contact occupancy by ongoing data packet i occurs at specific times t_{i,1}, t_{i,2} and t_{i,3} and during specific transmission periods, such periods depending on the transmission rate of the contact C₁-C₄ and the data packet size notably. Contacts C₁, C₂ and C₃ present an overall available remaining capacity, yet such capacity is time-dependent, since at times t_{i,1}, t_{i,2} and t_{i,3} and during the transmission periods d_{i,1}, d_{i,2}, d_{i,3}, the capacity of such contacts C₁, C₂ and C₃ is fully used by the transmission of the ongoing data packet i.

Thus, when an upcoming data packet j needs to be transmitted from a source entity (e.g., corresponding to routing entity C) to a destination entity (e.g., corresponding to routing entity E), the route search should not only consider the data volume of contacts C₁-C₄, as represented on figure 2, but also the transmission timing of the upcoming data packet j in each contact C₁-C₄ and the data capacity of each contact C₁-C₄ as a time-dependent parameter. Referring to figure 3, even if the remaining contact volume of contact C₃ is not null, the transmission of the upcoming data packet j via contact C₃ may cause a collision with the transmission of the ongoing data packet i, due to the respective transmission timing and periods of both data packets i, j. Indeed, data packet j may arrive on contact C₃ at time t_{j,3}, at which the contact capacity of contact C₃ is fully occupied by ongoing data packet i (that is, t_{j,3} is comprised between t_{i,3} and t_{i,3}+d_{i,3}).

Moreover, the route search should also consider the buffer capacity of the routing entities A-E. As illustrated on figure 5, the transmission of upcoming data packet j via contact C₃ may cause a buffer overflow at the routing entity D, since the predefined maximum buffer occupancy M_{D} of routing entity D is exceeded, notably due to the transmission of the upcoming data packet j to the routing entity D (e.g., via contact C₃ but possibly via other contacts, not represented on the figures, but leading to the upcoming data packet j being forwarded to routing entity D).

Such contact and buffer occupancy aspects, as well as their time-dependency, should thus be considered when determining a route for transmitting an upcoming data packet j, so as to perform an optimal and accurate route search.

The present disclosure proposes to address such issues, as detailed in the methods represented by the flowcharts of figures 6A, 6B and 7.

In a first aspect and referring to figures 6A and 6B, the present disclosure proposes methods 60a, 60b for determining assistance information. Such assistance information enables to provide relevant information for determining a route to transmit an upcoming data packet j in the delay tolerant network. Such assistance information may notably be provided to routing entities A-E and/or to any other entity of the network configured to perform a route search algorithm.

The proposed methods 60a, 60b may be performed by a first network entity 1, as represented on figure 1. Such first network entity 1 may be understood as any device, equipment, system or unit of the delay tolerant network configured to determine assistance information. Such first network entity 1 may be embarked on a non-terrestrial system or be included in a terrestrial system of the network. Such first network entity 1 is connected to the network and is able to receive initial network information (e.g., from the core network, from satellite constellations). The first network entity 1 may also communicate with other entities connected at least temporarily (or intermittently) to the network, such as routing entities A-E. To such ends, the first network entity 1 may include a communication unit 10, a memory unit 11 and a processing unit 12, as schematized on figure 1.

It is now referred to figure 6A. Figure 6A details steps of the method 60a for determining the content of the assistance information.

At a step S60, the first network entity 1 obtains at least part of the initial network information related to the delay tolerant network. Such part of the initial network information may for example include data related to at least one initial contact C₁-C₄ linking two routing entities A-E. For example, step S60 may include receiving data related to all or part of the initial contacts C₁-C₄ existing in the network, associated with their respective data capacity and initial connectivity window. The initial network information received at step S60 may for example correspond to information contained in a contact plan as summarized on figure 4. The initial network information received at step S60 may also contain information about routing entities A-E of the network and any other broadcast information related to the delay tolerant network (e.g., satellite ephemerides and almanacs).

Such initial network information may be received by the first network entity 1 from the core network and/or from other network entities (e.g., satellites) at a periodic frequency via broadcast, groupcast or unicast transmissions.

The method 60a then includes determining assistance information based on at least said network information obtained at step S60. In particular, such assistance information may include at least one element among:
- packet-generic assistance information, corresponding to assistance information to be used for determining a route for any data packet, independently from parameters specific to such data packet, and
- packet-specific assistance information, corresponding to assistance information to be used for determining a route for a specific upcoming data packet j, depending on parameters specific to such upcoming data packet.

Steps S611, S6111, S612, S613 and S61 detail steps for determining the packet-generic assistance information, while steps S621, S622, S623, S624, S625, S62 detail steps for determining the packet-specific assistance information.

In particular, the packet-generic assistance information and the packet-specific assistance information may be determined alternatively, concurrently, successively or complementarily to each other.

At a step S611, the first network entity 1 may obtain data related to the transmission of at least one data packet, corresponding to an ongoing data packet i. Such data may for example correspond to an (ongoing) route to be used or already used for transmitting (i.e., routing) the ongoing data packet i via the network. Such route may be determined or computed by an entity of the delay tolerant network (e.g., the second network entity 2) using a route search algorithm, such as the method 70 which will be further described, or any other existing route search algorithm.

Such data may also correspond to a route plan, containing a plurality of routes computed for a plurality of respective ongoing data packets h, i. The route of the at least one ongoing data packet i may include a succession of routing entities A-E and/or of contacts C₁-C₄ involved in the route for transmitting the ongoing data packet i. Such data may also include a time occupancy and/or a capacity occupancy and/or a buffer occupancy of contact(s) and/or routing entity(ies) involved in the route by such ongoing data packet i.

Such data related to the transmission of the at least one ongoing data packet i thus reflects the current occupancy of the routing entities A-E and contacts C₁-C₄ of the network by ongoing data packets i, for which routes have already been computed and validated. Such current occupancy thus impacts the determination of future routes to be determined, for example for transmitting an upcoming data packet j.

At a step S612, the first network entity 1 performs a contact splitting step, by splitting at least one initial contact C₁-C₄ based on the data obtained at previous steps S60 and S611. Such contact splitting notably aims at determining updated and accurate information about contacts C₁-C₄, by taking the ongoing data packets i and (ongoing) routes into account.

The contact splitting performed at step S612 results, starting from an initial contact C₁-C₄ between two routing entities A-E, in at least a first split contact and a second split contact between such two routing entities A-E.

To that end, step S612 may include identifying, based on the data related to the transmission of the at least one ongoing data packet i at step S611, the initial contacts C₁-C₄ involved in the route for transmitting the ongoing data packet i, and, for each of such initial contact C₁-C₄:
- determining at least one portion of the initial contact C₁-C₄ related to the transmission of the ongoing data packet i,
- splitting the initial contact C₁-C₄ by cutting out parts of the initial contact C₁-C₄ corresponding to said portion, the remaining parts of the initial contact C₁-C₄ corresponding to the first and second split contacts.

In particular, at step S612, the portion of the initial contact C₁-C₄ related to the transmission of the ongoing data packet i corresponds to parts of the initial contact C₁-C₄ occupied by the ongoing data packet i, according to the route computed for transmitting such ongoing data packet i. Such occupancy may notably be a time occupancy and/or a capacity occupancy.

For example, referring to figure 3, the at least one portion of the initial contact C₁ related to the transmission of the ongoing data packet i is illustrated in black. Such portion reflects an actual (i.e., real) occupancy of the initial contact C₁ by the transmission of the ongoing data packet i. Such portion notably has:
- a capacity occupancy of the initial contact C₁, and
- a time occupancy of the initial contact C₁, spanning between times t_{i,1} and t_{i,1}+d_{i,1}.

In other words, such portion of the initial contact C₁, delimited both in capacity (vertical direction on figure 3) and in time (horizontal direction on figure 3), is unavailable for routing other data packets, notably the upcoming data packet j.

Splitting the initial contact C₁ then corresponds to cutting out such portion, in time, resulting in replacing the initial contact C₁ linking routing entities A and B and spanning between times t_{1,1} and by two split contacts having the same capacity as the initial contact:
- a first split contact C₁ₐ linking the same routing entities A and B but spanning between times t_{1,1} and t_{i,1}, and
- a second split contact C_{1b} linking the same routing entities A and B but spanning between times t_{i,1}+d_{i,1} and t_{1,2}.

In particular, in some possible embodiments, the portion of the initial contact C₁ related to the transmission of the ongoing data packet i may correspond to a portion having a time occupancy coinciding with the beginning time t_{1,1} and/or end time of the initial contact C₁, so that the contact splitting step S612 corresponds to a contact time shortening.

Such contact splitting step S612 detailed for initial contact C₁ may also be performed in a similar way for all initial contacts C₁-C₄. For example, referring to figure 3, based on the transmission on the ongoing data packet i via initial contacts C₂ and C₃ as well, the contact splitting step S612 leads to:
- split the initial contact C₂ in a first split contact C₂ₐ (spanning between times t_{2,1} and t_{i,2}) and a second split contact C_{2b} (spanning between times t_{i,2}+d_{i,2} and t_{2,2}), and
- split the initial contact C₃ in a first split contact C₃ₐ (spanning between times t_{3,1} and t_{i,3}) and a second split contact C_{3b} (spanning between times t_{i,3}+d_{i,3} and t_{3,2}).

The contact splitting step S612 may also lead to split initial contacts C₁-C₄ in more than two split contacts. For example, an initial contact C₁-C₄ may result in several split contacts when several distinct portions of the same initial contact C₁-C₄ are related to the transmission of several distinct ongoing data packets and/or several fragments of same data packets.

In an optional embodiment, step S612 may also include, before splitting the initial contacts C₁-C₄ based on the transmission of the ongoing data packet i, performing a preliminary splitting of several or each of the initial contacts C₁-C₄ in capacity and/or time for keeping a contact margin. Advantageously, such contact margin may serve as a contact backup volume, to be used in case of a potential rerouting of data packets (e.g., due to unpredictable or unknown events in the network when computing the proposed route search method). Such contact margin may notably be used by any node - notably by nodes that do not have access to information related to the contact capacity occupancy or to the routes scheduled for ongoing data packets for example - without requiring to compute a whole new route taking contact occupancies into account. Such contact margin has a predefined size stored by the first storage unit 11 of the first network entity 1, such size notably depending on the contact parameters and a disruption level. The contact margin may for example span in each initial contact C₁-C₄ in time during the whole time availability of the initial contact C₁-C₄ and in capacity for a fraction of the overall capacity of the initial contact C₁-C₄. The contact margin for the initial contacts C₁-C₄ may then be stored by the first storage unit 11. The contact splitting step S612 as described based on the transmission of the ongoing data packet i may then be performed on the remaining part of the initial contact C₁-C₄.

Step S612 thus results in a modified contact plan, corresponding to a set of split contacts C_{(1 to 4)a}, C_{(1 to 4)b} computed by the first network entity 1 by taking the data related to the transmission of ongoing data packets i - and possibly contact margins - into account.

In particular, as further described via step S6111, the contact splitting step S612 may be performed as an iterative step, notably when considering a plurality of ongoing data packets, in which case the contact splitting is performed by replacing the initial contacts C₁-C₄ by split contacts C(_{1to 4)a}, C_{(1 to 4)b}. In other words, once split contacts C_{(1to 4)a}, C_{(1to 4})_{b} are determined via step S612, such split contacts C_{(1 to 4)a}, C_{(1 to 4)b} replace the initial contact C_{(1 to 4)} they are split from and so on. In particular, any further steps performed using contacts C₁-C₄ may use the split contacts C_{(1to 4)a}, C_{(1 to 4)b} resulting from step S612.

At a step S613, a buffer table may be determined by the first network entity 1, such buffer table comprising, for each routing entity A-E, a time-dependent value related to a buffer occupancy of such routing entity A-E. Such value may for example correspond to a buffer occupancy value of each routing entity, or in contrary, to a buffer availability value, expressed in units (e.g., data units) or in percentage for example.

In particular, step S613 may include determining an initial buffer table, corresponding to a buffer table containing initial values related to an initial occupancy of all routing entity buffers. Typically, such initial buffer table may reflect a state of the routing entity buffers before any data packet occupies such buffers. For example, such initialized buffer table may list the following buffer occupancy values (at all time instants t): A(t) = (0 %), B(t) = (0 %), C(t) = (0 %) and D(t) = (0 %) or equivalently, the following availability values: A(t) = (100%), B(t) = (100 %), C(t) = (100 %) and D(t) = (100 %). The values contained in the initialized buffer table may also depend on predefined maximum buffer occupancy values M_{A-E} of routing entities A-E (e.g., expressed in data units), such predefined maximum buffer occupancy values being for example included in the network information related to the routing entities A-E obtained by the first network entity 1 during step S60. For example, referring to figure 5, a predefined maximum buffer occupancy M_{D} of routing entity D is illustrated. For instance, the initial buffer table may list the following buffer occupancy values (at all time instants t): A(t) = (0 / M_{A}), B(t) = (0 / M_{B}), C(t) = (0 / M_{c}) and D(t) = (0 / M_{D}).

The initial buffer table may thus be determined by the first network entity 1 based on initial network information received at step S60. The initial buffer table may also be obtained by the first network entity 1 via such network information received at step S60.

In an optional embodiment, step S613 may include, based on the initial buffer table, performing a preliminary buffer splitting, for keeping a buffer margin on the initial values related to the initial buffer occupancy (or availability) of the routing entities A-E. Advantageously, such buffer margin may serve as a buffer backup volume, to be used in case of a potential rerouting of data packets (e.g., due to unpredictable or unknown events in the network when computing the proposed route search method). Such buffer margin may notably be used by any node - notably by nodes that do not have access to information related to the buffer occupancy or to the routes scheduled for ongoing data packets for example - without requiring to compute a whole new route taking buffer occupancies into account. Such buffer margin may be predefined and deduced from the maximum buffer occupancy values of the routing entities A-E. For example, if the predefined maximum buffer occupancy of routing entity D is M_{D}=4 data units, the preliminary buffer splitting may consider the initial buffer availability value as being equal to 3 data units, one data unit being kept as a buffer margin for routing entity D. Such preliminary buffer splitting may be performed similarly for other routing entity buffers. In such optional embodiment, the initial buffer table to be used for further updates corresponds to the buffer table obtained after the preliminary buffer splitting (i.e., to the buffer occupancy remaining after preliminarily removing the buffer margin).

Step S613 then includes updating the initial buffer table based on at least data related to the transmission of at least one ongoing data packet i received at step S611. To that end, the first network entity 1 may determine or obtain at least one route for transmitting the ongoing data packet i from the data related to the transmission of at least one ongoing data packet i. Such route potentially involves a plurality of routing entities A-E to be used for transmitting the ongoing data packet i. Updating the initial buffer table at step S613 may thus include updating the buffer occupancy values of the routing entities A-E involved in such route. In particular, such buffer occupancy values are time-dependent, as such values may be updated when a data packet is scheduled to be routed (e.g., when a route is selected, computed or validated). More specifically, each time a new route is scheduled for transmitting a (new) ongoing data packet, the buffer table values may be updated for such time and for all future times based on the updated knowledge of the first network entity 1 about such new route and the already scheduled routes. For example, based on the route scheduled for transmitting ongoing data packet i from nodes A to D (as shown on figure 3) and considering that the only other route already scheduled and known by the first network entity 1 for other ongoing data packets is the route for transmitting ongoing data packet h from nodes C to E, the only overlap between ongoing data packets h and i being at node D (as illustrated on figure 5) for example, the following buffer occupancy values may be updated for different times t:
- A(t) = (1/M_{A}) for all times t between the time of arrival of ongoing data packet i at node A, t and the time of departure of ongoing data packet i from node A; and A(t) = (0/M_{A}) for all other times,
- B(t) = (1/M_{B}) for all times t between the time of arrival of ongoing data packet i at node B and the time of departure of ongoing data packet i from node B; and B(t) = (0/M_{B}) for all other times,
- C(t) = (1/Mc) for all times t between the time of arrival of ongoing data packet i at node C and the time of departure of ongoing data packet i from node C, and for all times t between the time of arrival of ongoing data packet h at node C and the time of departure of ongoing data packet h from node C; and C(t) = (0/Mc) for all other times,
- D(t) = (1/M_{D}) for all times between the time of arrival of ongoing data packet h at node D and before the time of arrival of ongoing data i at node D (i.e., between t_{h,3} and t_{i,3} on figure 5), D(t) = (2/M_{D}) for all times between the time of arrival of ongoing data packet i at node D
and before the time of departure of ongoing data h from node D (i.e., between t_{i,3} and t_{h,3}+δ_{h,D} on figure 5), D(t) = (1/M_{D}) for all times between the time of departure of ongoing data packet h from node D and before the time of departure of ongoing data i from node D (i.e., between t_{h,3}+δ_{h,D} and t_{i,3}+δ_{i,D} on figure 5), and D(t) = (0/M_{D}) for all other times.

In such example and in the examples schematized on figures 3 and 5, it is considered that the time of arrival and/or departure at and/or from a node is the same as the time of arrival and/or departure at and/or from a contact leading to such node. In other embodiments, such times may be distinct and their gap is known.

Similarly, the buffer table may be continuously updated as new routes for transmitting other ongoing data packets are scheduled and obtained by the first network entity 1 at step S611.

In particular, the buffer table may be updated according to the route scheduling of each data packet, for example contained in the data related to the transmission of such ongoing data packet. For example, when a route is scheduled for transmitting a data packet, the data packet is scheduled to arrive at, stay and leave a given buffer of a given routing entity A-E at identified times. The buffer table may then be updated according to such times. In practice, the buffer occupancy value of the involved routing entities A-E may be incremented for the times between the arrival and the leaving of the data packet. Thus, the buffer table may be updated when a route is selected or computed for transmitting an ongoing data packet, so that the buffer occupancy values are increased between the scheduled arrival time of the packet to the node and the scheduled departure time of the packet from such node, as scheduled by the route determined for transmitting such packet.

In an embodiment, when defining buffer occupancy values, it may be distinguished a time t - at which a state of each buffer is considered - and a time t' - until when a scheduling of data packets is known. For example, considering the ongoing data packet i, a route for transmitting such ongoing data packet i may be scheduled at a time t'i. In particular, such time t'i may differ from the actual time ti of transmission of such ongoing data packet i (since the transmission scheduling may occur beforehand). The buffer occupancy values may then be considered as a state of the respective buffers at a time t, taking into account all data packets that have been scheduled up to time t'. Such buffer occupancy values for routing entities A-E may be noted A-E^{t'}(t). In particular, time t may be later than time t' (i.e., t > t'), since the scheduling of a data packet (at time t') defines buffer occupancy by such data packet for future times t (more precisely, until the data packet reaches its destination entity according to the scheduled route).

Thus, in the context of the present disclosure, the previously described A-E(t) may be understood as the buffer occupancy values at times t considering the latest scheduled route for transmitting an ongoing data packet, as well as all the previously validated / scheduled routes (that is, the buffer occupancy values at time t reflect the impact, at time t, of all scheduled routes up to the latest scheduled route known by the first entity 1).

At an optional step S6111, another route (or several other routes) may be obtained by the first network entity 1, for transmitting (an)other(s) ongoing data packet(s). Steps S612 and S613 may then be repeated to take such other route(s) into account for updating the contacts C₁-C₄ (that is, iterating the contact splitting step S612 accordingly) and the buffer table (that is, updating the buffer table updating step S613 accordingly).

Thus, at a step S614, the first network entity may determine and transmit packet-generic assistance information, independently from the upcoming data packet j to be transmitted.

Step S61 of the proposed method 60a, which includes steps S612 to S614 as previously described, thus enables to determine packet-generic assistance information, which is relevant for determining the route for transmitting any upcoming data packet. In particular, such packet-generic assistance information may include at least one among:
- data related to the initial buffer table (including for example, maximum buffer occupancy values for the respective node buffers),
- data related to the (updated) buffer table (including for example the time-dependent buffer occupancy values),
- data related to at least a first and second split contacts (including for example the start and end times of the connectivity windows associated to such split contacts),
- data related to contact margins (including for example a list of contacts having a contact margin, a size - in time and/or in capacity - of such contact margins),
- data related to buffer margins (including for example a list of routing entities A-E having a buffer margin, a size - in time and/or in occupancy - of such buffer margins).

Such packet-generic assistance information may be transmitted to one or a plurality of entities of the network (e.g., routing entities A-E), for example to all network entities involved in the transmission of any upcoming data packet. An example of transmission will be further detailed in figure 6B.

Thus, the updated contacts and buffer table computed by the first network entity 1 at respective steps S612 and S613 (and iteratively updated by the first network entity 1 as other routes are computed by the second network entity 2 at step S6111) form elements of the assistance information determined by the first network entity 1. In particular, such elements determined during step S61 form the packet-generic assistance information determined by the first network entity 1.

At a step S621, following step S60 and either concomitantly, successively or alternatively to the first network entity 1 may receive data related to the transmission of at least one data packet, corresponding to an upcoming data packet j. In particular, such data related to the transmission of the upcoming data packet j may be received in decorrelation with the data related to the transmission of the ongoing data packet i at step S611.

The data related to the transmission of the upcoming data packet j may for example include parameters specific to the upcoming data packet j, such as:
- a size of the upcoming data packet j,
- source and destination entities of the upcoming data packet j,
- a buffer occupancy (e.g., in data units) by the upcoming data packet j,
- a contact occupancy value (e.g., in volume, in data capacity and/or in time) by the upcoming data packet j, such contact occupancy value notably depending on contact parameters,
- transmission constraints for the upcoming data packet j, such as a maximum delay tolerance, a maximum emission time at the source entity or a maximum arrival time at the destination entity for example,
- Quality of Service (QoS) requirements for the upcoming data packet j, and/or
- a transmission priority rank of the upcoming data packet j.

Such data related to the transmission of the upcoming data packet j may be received by the first network entity 1 from another network entity of the delay tolerant network, such as a core network entity, a base station entity allocating radio resources for the transmission of the upcoming data packet j via the network or the source entity of the upcoming data packet j.

At a step S622, based on the data related to the transmission of the upcoming data packet j received at previous step S621, the first network entity 1 determines a hypothetical buffer table.

To that end, during step S622, the first network entity 1 determines an initial buffer table (based on the predefined maximum buffer occupancy values for the routing entities A-E, when no route is computed for an ongoing data packet i) or an updated buffer table (based on data related the transmission of at least one ongoing data packet i), as detailed in step S613. The first network entity 1 may also use the buffer table as computed during step S613, when such step S613 occurred beforehand.

Based on such buffer table, the first network entity 1 determines a hypothetical buffer table by determining a hypothetical update of the time-dependent value of the buffer table, such hypothetical update reflecting a hypothetical buffer occupancy (or availability) of the each routing entity A-E when taking the routing entity into account. In particular, such hypothetical update may be performed by computing the buffer occupancy by the upcoming data packet j (known based on the size of the upcoming data packet j) to the buffer occupancy (or availability) value of each of a plurality of routing entities A-E. Such plurality of routing entities A-E may correspond to all routing entities A-E of the delay tolerant network or some routing entities A-E (e.g., the routing entities A-E possibly involved in a route for transmitting the upcoming data packet j, determined based on the specific parameters of such upcoming data packet j and on the initial network information related to the network). Such (hypothetical) buffer occupancy by the upcoming data packet is considered for all time periods. Optionally, such hypothetical buffer occupancy may be considered based on a possible arrival time of the upcoming data packet in each of the plurality of routing entities. Referring to figure 5 as an example, the buffer occupancy of routing entity D is represented. The hypothetical buffer occupancy of upcoming data packet j at step S622 is represented by hypothetically adding the size of the upcoming data packet j to the buffer table of routing entity D (in addition to the respective sizes of possible actual ongoing data packets h, i) at all time periods.

In particular, such update of the buffer table at step S622 is hypothetical (i.e., virtual) because a route for transmitting the upcoming data packet j is not yet computed (thus, neither the routing entities A-E nor the times when they (i.e., their buffer) are occupied are identified at this step). Thus, differently from the buffer table computed at step S613 based on data related to the transmission of an ongoing data packet i, which reflects a real situation of the buffer occupancy of the distinct routing entities A-E, the hypothetical buffer table reflects a hypothetical situation of the buffer occupancy of the distinct routing entities A-E, would the upcoming data packet j occurs to occupy such respective buffers at all time periods.

The hypothetical buffer table is thus determined at step S622 by virtually adding the buffer occupancy by the upcoming data packet j from the buffer occupancy value of each routing entity in the buffer table. For example, if the buffer occupancy of an upcoming data packet j is one data unit, then a hypothetical buffer table computed at step S622 from an initial buffer table (where all buffers are considered empty) can contain the following hypothetical buffer occupancy values for all times t considered: A(t) = (1 / M_{A}), B(t) = (1 / M_{B}), C(t) = (1 / M_{c}) and D(t) = (1 / M_{D}). Equivalently, such hypothetical buffer occupancy values may also be noted A^{j} (t) = (1 / M_{A}), B^{j} (t) = (1 / M_{B}), C^{j} (t) = (1 / M_{c}) and D^{j} (t) = (1 / M_{D}), to reflect that such values are hypothetically updated for all times t based on the upcoming data packet j. Similarly to the buffer occupancy values, the hypothetical buffer occupancy values are time-dependent values, as they are (virtually) updated when an upcoming data packet is considered (and the size of such upcoming data packet j is known). Thus, tⱼ may for example correspond to a time when an upcoming data packet is considered at the first entity 1. In another example, if the buffer occupancy of another upcoming data packet j' is two data units, then a hypothetical buffer table computed at step S622 from an initial buffer table can contain the following hypothetical buffer occupancy values for all times t: A(t) = (2 / M_{A}), B(t) = (2 / M_{B}), C(t) = (2 / M_{c}) and D(t) = (2 / M_{D}). Equivalently, such hypothetical buffer occupancy values may also be noted A^{j'} (t) = (2 / M_{A}), B^{j'} (t) = (2 / M_{B}), C^{j'} (t) = (2 / M_{c}) and D^{j'} (t) = (2 / M_{D}) to reflect that such values are hypothetically updated for all times t based on the upcoming data packet j. Such hypothetical buffer table may also be computed based on a buffer table already updated based on routes for transmitting ongoing data packets i (i.e., on a buffer table having non null buffer occupancy values and having buffer occupancy values updated as detailed in step S613).

At a step S623, based on the hypothetical buffer table determined at the previous step S622, the first network entity 1 may identify at least one hypothetical buffer overflow. Such hypothetical buffer overflow is related to a hypothetical buffer occupancy value of the hypothetical buffer table exceeding the predefined maximum buffer occupancy value M_{A-E} of a given routing entity A-E, such given routing entity A-E being referred to as an overflowed routing entity A-E. In other words, following the hypothetical update of the buffer table at step S622, the first network entity 1 determines at step S623 whether such hypothetical update (i.e., should the upcoming data packet j occupy considered buffer(s) of considered routing entity(ies) A-E) would lead to exceed the maximum tolerated buffer occupancy of such routing entity(ies) A-E. If that is the case, the hypothetical buffer overflow may be identified with at least:
- the overflowed routing entity,
- the time period during which the hypothetical buffer overflow occurs.

For example, referring to figure 5, it is considered two ongoing data packets h, i, for which respective routes are already computed. Such routes notably both involve storing the ongoing data packet h, i in the buffer of routing entity D. For example, the routes determined for both ongoing data packets h and i may involve transmitting the ongoing data packets h, i via contact C₃ linking routing entities C and D and require a buffering at routing entity D before being forwarded to another routing entity (e.g. routing entity E, via contact C₄). As illustrated on figure 5, according to its computed route, ongoing data packet h occupies the buffer of routing entity D from time t_{h,3} (i.e., at time t_{h,3}, ongoing data packet h is scheduled to arrive at routing entity D and is stored in the buffer of routing entity D) to time t_{h,3}+δ_{h,D} (i.e., at time t_{h,3}+δ_{h,D}, ongoing data packet h is scheduled to leave the buffer of routing entity D and thus frees some buffer occupancy of routing entity D). According to its computed route, ongoing data packet i occupies the buffer of routing entity D from time t_{i,3} (i.e., at time t_{i,3}, ongoing data packet i is scheduled to arrive at routing entity D and is stored in the buffer of routing entity D) to time t_{i,3}+δ_{i,D} (i.e., at time t_{i,3}+δ_{i,D}, ongoing data packet i is scheduled to leave the buffer of routing entity D and thus frees some buffer occupancy of routing entity D). It is also considered that the predefined maximum buffer occupancy value of routing entity D is two (2) data units and that each of the ongoing data packet h, i occupies one (1) data unit in the buffer of routing entity D. Thus, the real buffer occupancy value for routing entity D (as contained in the buffer table) is, for different key time periods illustrated on figure 5: D(t) = (1 / M_{D} = 2) for times t from time t_{h,3} to time t_{i,3}, D(t) = (2 / M_{D} = 2) for times t from time t_{i,3} to t_{h,3}+δ_{h,D}, D(t) = (1 / M_{D} = 2) for times t from time t_{h,3}+δ_{h,D} to time t_{i,3}+δ_{i,D} and D(t) = (0 / M_{D} = 2) for times after time t_{i,3}+δ_{i,D}.

In reference to figure 5, it is considered an upcoming data packet j, which buffer occupancy is one (1) data unit. No actual route for transmitting such upcoming data packet j is determined yet. A hypothetical buffer occupancy of such upcoming data packet j is added to the buffer of routing entity D at all time periods. Thus, the hypothetical buffer occupancy value for routing entity D (as contained in the hypothetical buffer table) is, for different key time periods illustrated on figure 5: : D(t) = (2 / M_{D} = 2) for all times t from time t_{h,3} to time t_{i,3}, D(t) = (3 / M_{D} = 2) for all times t from time t_{i,3} to t_{h,3}+δ_{h,D}, D(t) = (2 / M_{D} = 2) for all times t from time t_{h,3}+δ_{h,D} to t_{i,3}+δ_{i,D}.and D(t) = (1 / M_{D} = 2) for all times t after time t_{i,3}+δ_{i,D}.

Thus, in such example of figure 5, a hypothetical buffer overflow is identified at routing entity D, in a time period spanning between t_{i,3} and t_{i,3}+T, since the hypothetical buffer occupancy of routing entity D (i.e., three) exceeds the maximum buffer occupancy of the routing entity D (i.e., M_{D} = 2) during such time period T. Such hypothetical buffer overflow at routing entity D would start at time t_{i,3} because ongoing data packets h and i (actually) scheduled to be stored at the buffer of routing entity D already fill such buffer. Such hypothetical buffer overflow would cease at time t_{i,3}+T when the ongoing data packet h (actually) scheduled to leave the buffer of routing entity D according to the route computed for transmitting ongoing data packet h.

If no hypothetical buffer overflow is identified at step S623 - that is, if, for each routing entity, the hypothetical buffer occupancy value computed at step S622 remains below the predefined maximum buffer occupancy value M_{A-E} at all times -, the next steps S624 and S625 are omitted and step S626 of transmitting packet-specific assistance information is directly performed. In particular, such step S62 may then include information related to the absence of hypothetical buffer overflow at routing entities considering the specific parameters of the upcoming data packet j to be transmitted and the buffer table as determined at step S613 and/or S622.

At a step S624, based on the at least one hypothetical buffer overflow identified for at least one routing entity A-E, a hypothetical contact splitting is performed on contacts (corresponding to either initial contacts C₁-C₄ or split contacts C_{(1 to 4)a}, C_{(1 to 4)b}, when step S612 already occurred - that is when at least one ongoing data packet has a validated route), leading to such hypothetical buffer overflow. The hypothetical splitting step S624 results in hypothetical split contacts. Such hypothetical contact splitting aims at preventing the hypothetical buffer overflow from occurring by cutting out portions of contacts that can theoretically lead to such hypothetical buffer overflow. To that end, considering a hypothetical buffer overflow occurring at a given routing entity A-E, referred to as overflowed routing entity (e.g., at routing entity D, in reference to figure 5), the first network entity 1 identifies all contacts leading to buffering a data packet at such overflowed routing entity A-E. For example, referring to figure 5, initial contact C₃ links routing entities C and D and stores data packets at the buffer of routing entity D (e.g., when such data packets cannot be immediately forwarded from routing entity D to another routing entity). Thus, such initial contact C₃ can theoretically lead to the hypothetical buffer overflow as identified at previous step S623. More precisely, the hypothetical buffer overflow being delimited between times t_{i,3} and t_{i,3}+T, a portion of the initial contact C₃ leading to buffering data packets at the routing entity D buffer during such critical time period T may be identified, as illustrated on the striped portion of the initial contact C₃. Such portion is then (hypothetically) cut out from the initial contact C₃, the remaining parts of the initial contact C₃ forming a first hypothetical split contact C_{3a*} and a second hypothetical split contact C_{3b*}.

Such step S624 may be performed similarly for each contact (i.e., for initial contacts C₁-C₄ as represented on figure 3 and/or for split contacts as determined at step S612) leading to each hypothetical buffer overflow identified at step S623, at each overflowed routing entity.

Thus, step S624 enables to (hypothetically) modify the set of available contacts, so as to avoid having contacts (or portions of contacts) leading to directly buffering data packets at the overflowed routing entity D during the time period T of the hypothetical buffer overflow.

While step S624 enables to prevent data packets j from arriving at the buffer of an overflowed routing entity during the time period T of a hypothetical buffer overflow, it does not prevent data packets j arriving at the buffer of the overflowed routing entity before such time period T and leaving the buffer after such time period T, meaning that the data packet j would *de facto* be buffered during the time period T. For example, referring to figure 5, routes for transmitting ongoing data packets h and i are already validated, leading to ongoing data packets h, i occupying the buffer of routing entity D during respective time intervals spanning between t_{h,3} and t_{h,3}+δ_{h,D}, and t_{i,3} and t_{i,3}+δ_{i,D}. Despite the hypothetical contact splitting step S624 leading to the first and second hypothetical split contacts C_{3a*}, C_{3b*}, a hypothetical buffer overflow would still occur if upcoming data packet j arrives at the routing entity D before time t_{i,3}, via first hypothetical split contact C_{3a*}, and leaves the buffer of routing entity D any time after time t_{i,3}, for example after time t_{i,3}+δ_{i,D}, via any contact from routing entity D to another routing entity (e.g., contact C_{4(D-E)}), since the upcoming data packet j would have to be stored at the buffer of routing entity D in the meantime (including during time period T or a part of such time period T), leading to the hypothetical buffer overflow. More generally, if upcoming data packet j reaches the buffer of routing entity D before the start time of the hypothetical buffer overflow and does not leave the buffer of routing entity D before the start of the hypothetical buffer overflow, a buffering issue would occur.

In order to avoid such indirect buffering of data packets, a step S625 is proposed. Step S625 includes identifying at least one hypothetical contact incompatibility, said hypothetical contact incompatibility corresponding to a forbidden consecutiveness of (split and/or initial) contacts leading to at least one hypothetical buffer overflow. More precisely, for any given node α (e.g., α being one of routing entities A-E) and considering a hypothetical buffer overflow at such node α, there is a contact incompatibility between:
- a contact from any node to node α, such contact ending before the beginning of the hypothetical buffer overflow, and
- a contact from node α to any other node, such contact starting after the beginning of the hypothetical buffer overflow.

For example, referring to figure 5 and as described precedingly, the consecutiveness of first hypothetical split contact C_{3a*} and any other contact X starting from routing entity D to any other routing entity, and having a start time t_{X,1} after t_{i,3}, in a route for transmitting upcoming data packet j would lead to a hypothetical buffer overflow at routing entity D. For example, if the start time t_{4,1} of contact C_{4(D-E)} is later than t_{i,3} (i.e., t_{4,1} > t_{i,3}), then contacts C_{3a*} and C₄ are identified as a hypothetical contact incompatibility. Thus, the consecutiveness of such contacts is prevented at step S625 by identifying incompatible consecutiveness of contacts when computing a route. At step S625, the first network entity 1 may determine data related to at least one hypothetical contact incompatibility. Such data may for example include a list of pairs or n-tuples of contacts having a hypothetical contact incompatibility, in association to the transmission of a given upcoming data packet j. Such data may also be associated to a given node and/or a given hypothetical buffer overflow.

Thus, at a step S626, the first network entity may determine and transmit packet-specific assistance information, in association with the upcoming data packet j to be transmitted.

Step S62 of the proposed method 60a, which includes steps S622 to S626 as previously described, thus enables to determine packet-specific assistance information, specifically associated to the transmission of the upcoming data packet j. In particular, such packet-specific assistance information may include at least one among:
- data related to the hypothetical buffer table,
- data related to the absence of hypothetical buffer overflow,
- data related to at least one hypothetical buffer overflow,
- data related to the hypothetical first and second split contacts C₃ₐ*, C_{3b}*,
- data related to at least one hypothetical contact incompatibility.

Such packet-specific assistance information may be transmitted to one or a plurality of entities of the network (e.g., routing entities A-E), for example to network entities involved in the transmission of the upcoming data packet j. An example of transmission will be further detailed in figure 6B.

It is now referred to figure 6B. Figure 6B details steps of the method 60b for transmitting the assistance information determined in method 60a to other network entities of the network (e.g., routing entities A-E).

In particular, such assistance information may correspond to packet-generic assistance information and/or to packet-specific assistance information.

At a step S60 as also detailed in figure 6A, the first network entity 1 receives initial network information related to the delay tolerant network.

Optionally at a step S601, the first network entity 1 may also receive additional information, such additional information including at least one among:
- data related to the transmission of one or several ongoing data packets h, i (in which case step S601 includes step S611),
- data related to the transmission of a specific upcoming data packet j via the network (in which case step S601 includes step S621),
- data related to the transmission of a plurality of upcoming data packets via the network,
- data related to the transmission requirements and conditions for ongoing and/or upcoming data packets. For example, such data may include source and destination entities for each (ongoing and/or upcoming) data packet.
- data related to a request for transmitting all or part of the assistance information. Such request may for example be made by second network entities 2.

The additional information may also be received concomitantly or precedingly to the network information. Such additional information may be received from the other network entities such as the routing entities A-E and more particularly the source entities. Such additional information may also be received by core network entities, base stations, by a network orchestrator or more generally by network entities managing the resource allocation and packet transmission via the delay tolerant network.

Based on the initial network information and optionally, the additional information, the first network entity 1 may notably identify possible contacts C₁-C₄ and routing entities A-E for transmitting a data packet via the network. The first network entity 1 may also distinguish source entities (that is, routing entities configured to emit a data packet) from other routing entities. The first network entity 1 may also identify the one or several network entities configured to determine a route for transmitting a data packet, such network entities being generically referred to as the second network entity 2. For example, such second network entities 2 may correspond to the source entities. Such second network entities 2 may also correspond to entities connected to the delay tolerant network and being distinct and distant from routing entities.

At steps S61 and S62, as detailed in previous figure 6A, the first network entity 1 may determine assistance information. Such assistance information may be determined based on at least the initial network information received at step S60 and optionally based on the additional information received at step S601. Determining assistance information may notably include determining, S61, packet-generic assistance information and determining, S62, packet-specific assistance information.

At a step S630, the first network entity 1 may perform a filtering on the assistance information to be transmitted, based on the initial network information and optionally, on the additional information. In particular, such filtering enables to identify the assistance information to be transmitted, depending on the network entity. For example, during step S630, the first network entity 1 may identify entities corresponding to source entities. During step S630, the first network entity 1 may also identify routing entities configured to receive and forward data packets that are not source entities. Based on such filtering at step S630, the first network entity 1 may be configured to transmit selective assistance information at steps S631, S632, S633.

At a step S631, the first network entity 1 may transmit at least the packet-generic assistance information, determined at step S61, to a first group of network entities. Such first group of network entities may for example include all network entities configured to determine a route for transmitting a data packet - that is, all second network entities 2. Such first group may for example include source entities of the network (regardless of the data packets to be transmitted), when such source entities are configured to determine a route to transmit each of their data packets.

At a step S632, the first network entity 1 may further transmit, in addition to all or part of the packet-generic assistance information, all or part of the packet-specific assistance information, determined at step S62, to a second group of network entities. Such second group of network entities may for example be included in the first group of network entities and correspond to second network entities 2 further configured to determine route(s) for transmitting the specific upcoming data packet(s) for which the packet-specific assistance information was determined (e.g., upcoming data packet j).

At an optional step S633, the first network entity 1 may transmit part of the assistance information to a third group of network entities. In particular, such part of the assistance information may include data related to the contact margin and/or to the buffer margin determined during step S61. The third group of network entities may notably correspond to routing entities configured to receive, store and forward data packets. In other words, such routing entities may be involved in routes for transmitting data packets. Indeed, by providing margin information to such third group of network entities, such routing entities may be able to compute an alternative route for forwarding (or rerouting) a data packet in case the route determined by the second network entity 2 cannot be fully computed or encounters unexpected issues. Such alternative route may notably rely on and use contact and buffer margins, which guarantee contact and buffer availability for transmitting the data packet. Thus, such margin information transmitted to the third group of network entities serve as a safety net for rerouting data packets when needed.

In another embodiment, alternatively to steps S631, S632, S633, the first network entity 1 may also transmit the whole assistance information to all network entities involved in the transmission of data packets, including second network entities 2 and/or routing entities A-E.

The present disclosure also proposes, in a second aspect and referring to figure 7, a route search method 70 for determining (equivalently, for computing, scheduling or searching) a route to transmit an upcoming data packet j. In particular, such route search method 70 relies on at least part of the assistance information as determined with the method 60a. Such route search method 70 may be performed by at least one second network entity 2, as schematized on figure 1. In particular, such assistance information used for performing the route search may correspond to packet-generic assistance information and/or to packet-specific assistance information.

The second network entity 2 may be a network entity connected to the delay tolerant network and configured to determine a route for transmitting at least one upcoming data packet j via the network. Such second network entity 2 may for example correspond to a routing entity A-E, more particularly a routing entity A-E corresponding to a source entity (e.g., routing entity A is a source entity for the ongoing data packet i since routing entity A first emits the ongoing data packet i).

To perform the route search method 70 based on assistance information, the second network entity 2 may include a second communication unit 20, a second storage unit 21 and a second processing unit 22. The method 70 will be next detailed for one second network entity 2 and one upcoming data packet j. Yet, the person skilled in the part understands that the method 70 may be performed in a similar way for a plurality of second network entities 2 and/or for determining routes for respective several upcoming data packets.

At a step S71, the second network entity 2 may receive (initial) network information, related to the delay tolerant network. Such network information may for example contain information related to initial contacts C₁-C₄, routing entities A-E, a contact plan as illustrated on figure 4. Such network information may be received punctually or with a preconfigured periodicity. The network information may be received by the second network entity 2 from other network entities such as satellite constellations, base stations, terrestrial stations, core network entities for example.

At a step S72, the second network entity 2 receives or obtains data related to the transmission of an upcoming data packet j. For example, when the second network entity 2 corresponds to the source entity of the upcoming data packet j, such data may be obtained by the second network entity 2 when being allocated radio resources for transmitting the upcoming data packet j or when receiving an order (e.g., from a network packet orchestrator) to transmit (or emit) the upcoming data packet j. When the second network entity 2 is a network entity distinct from a source entity, such data may be obtained when the second network entity 2 receives information that an upcoming data packet j will be emitted by the source entity.

Such data related to the transmission of the second data packet j may for example include:
- a size of the upcoming data packet j,
- source and destination entities of the upcoming data packet j,
- a buffer occupancy (e.g., in data units) by the upcoming data packet j,
- a contact occupancy value (e.g., in data capacity and/or in time) by the upcoming data packet j, possibly for each contact C₁-C₄, such contact occupancy value notably depending on contact parameters,
- transmission constraints for the upcoming data packet j, such as a maximum delay tolerance, a maximum emission time at the source entity or a maximum arrival time at the destination entity for example,
- Quality of Service (QoS) requirements for the upcoming data packet j, and/or
- a transmission priority rank of the upcoming data packet j.

In a possible embodiment (not represented on figure 7), such initial network information received at step S671 and/or such data related to the transmission of the upcoming data packet j obtained at step S672 may be transmitted to the first network entity 1.

At a step S73, the second network entity 2 receives assistance information from the first network entity 1. Such assistance information may notably be determined by the first network entity 1 via the method 60a and transmitted - at least partially - to the second network entity 2 via the method 60b.

The assistance information received by the second network entity 2 at step S73 includes at least all or part of the packet-generic assistance information. In other words, the assistance information received at step S73 may include at least data related to split contacts and data related to an initial or updated buffer table.

Possibly, such assistance information received by the second network entity 2 at step S73 may also include all or part of the packet-specific assistance information, specific to the transmission of the upcoming data packet j. For example, such assistance information may include data related to the hypothetical buffer table, and/or data related to the hypothetical buffer overflows, and/or data related to the hypothetical split contacts C₃ₐ*, C_{3b}* and/or data related to the hypothetical contact incompatibilities. Such packet-specific assistance information may also only include data related to the hypothetical buffer table, or more generally packet-specific assistance information enabling the second network entity 2 to identify the hypothetical buffer overflows generated by the hypothetical occupation of the upcoming data packet j, as next steps S75, S77 will further describe.

In a possible embodiment - and when the initial network information is not obtained by the first network entity 1 from the second network entity 2 as mentioned precedingly - step S71 may be performed concomitantly with step S73, the first network entity 1 possibly transmitting both the assistance information - as determined at steps S61, S62 - and the initial network information - as received at step S60 (by another network entity of the network).

At a step S74, the second network entity 2 is configured to determine at least one route for transmitting the upcoming data packet j, based on at least the assistance information received at step S73. In other words, the second network entity 2 is configured to perform a route search algorithm for identifying a succession of routing entities A-E (or equivalently, of contacts or split contacts) for routing the upcoming data packet j from the source entity to the destination entity.

Further to the assistance information, such route search algorithm may also rely on at least part the initial network information (received at step S71 or concomitantly with step S73), as well as on data related to the upcoming data packet j as obtained at step S72.

The route search step S74 may notably rely on at least part of any existing route search algorithm or principle, for example a shortest-path algorithm (e.g., Dijkstra algorithm), the Contact-Graph Routing - CGR - algorithm or any other existing algorithm for determining routes in a delay tolerant network.

In an embodiment, the second network entity 2 may be configured to determine the best route for transmitting the upcoming data packet j, based on the requirements related to the transmission of the upcoming data packet j, as obtained at step S72. For example, the best route may be the shortest route in time, enabling to have the earliest estimated arrival time of the upcoming data packet at the destination entity. In other embodiment, the best route may be the route minimizing the hop number, that is, the number of contacts to be used for transmitting the upcoming data packet j. Any other parameter or requirement considered by the person skilled in the art could be applied by the second network entity 2 to determine the best route for transmitting the upcoming data packet j.

In particular, the route search algorithm performed by the second network entity 2 at step S74 differs from the existing route search algorithms as it takes assistance information into account. More particularly, the route search algorithm step S74 also takes (potentially indirectly, via list of split contacts and list of contact incompatibilities for example) hypothetical buffer overflows that could be generated by the transmission of the upcoming data packet j into account, in addition to actual contact and buffer occupation by ongoing data packets h, i.

Indeed, in a first embodiment of method 70, the assistance information directly includes the hypothetical split contacts and contact incompatibilities as determined by the first network entity 1. Thus, during steps S74 and S75, the second network entity 2 directly takes such hypothetical information into account, S75, to determine a best route, both considering the hypothetical split contacts, as determined during step S624, among the available contacts to be used for determining the route, and avoiding the hypothetical contact incompatibilities, as determined during step S625.

In such embodiment, at a step S76, a best route is determined and selected for transmitting the upcoming data packet. In particular, such best route takes into account both the buffer and contact capacity issues, due to the ongoing data packets h, i, but also due to the upcoming data packet j itself.

In a second embodiment of method 70, the assistance information includes data related to the hypothetical buffer table (as determined at step S622) or data related to the hypothetical overflowed routing entities (as determined at step S623). In particular, data related to the hypothetical contact splitting and the list of hypothetical contact incompatibilities may not be provided. Advantageously, such partial transmission of the assistance information enables the first and the second entities 1, 2 to manage and/or save computational and radio resources, by providing (by the first entity 1) and processing (by the second entity 2) assistance information in a selective way. For example, the first entity 1 may provide assistance information related to the hypothetical contact splitting and/or to the hypothetical contact incompatibilities only when the second entity 2 determines that such assistance information - specifically related to an overflowed routing entity - is actually required (e.g., when the overflowed routing entity would actually be candidate node for determining the best route). The first network entity 1 may thus save radio resources for systematically computing and/or transmitting such assistance information.

In such embodiment, at step S74, the second network entity 2 determines a temporary best route for transmitting the upcoming data packet j, by identifying the succession of routing entities A-E based on at least the packet-generic assistance information. Such packet-generic assistance information notably enables to determine the succession of contacts (initial and/or split contacts) which capacity and times fit with transmission requirements of the upcoming data packet j.

Then, at a step S75, the second network entity 2 may assess whether such temporary best route involves overflowed routing entities, based on the hypothetical buffer table. In other words, the second network entity 2 assesses whether:
- at least one hypothetical buffer value of the hypothetical buffer table exceeds the predefined maximum occupancy value of the routing entity A-E, and
- such routing entity A-E is involved in the succession of nodes A-E forming the temporary best route.

If none of the routing entities involved in the temporary best route determined by the second network entity 2 at step S74 corresponds to an overflowed routing entity, then at step S76, the temporary best route is selected or validated as the best route for transmitting the upcoming data packet j. Such best route is thus guaranteed to take into account both the buffer and contact capacity issues, due to the ongoing data packets h, i, but also due to the upcoming data packet j itself.

However, if, at step S75, at least one routing entity A-E involved in the temporary best route determined during step S74 is an overflowed routing entity, further step S77 and possibly steps S771, S772 are performed.

At step S77, the second network entity 2 may possibly request further packet-specific assistance information to the first network entity 1. During step S77, upon such request, the second network entity 2 may thus directly receive data related to the hypothetical buffer overflows, to the hypothetical split contacts and to the hypothetical contact incompatibilities determined by the first network entity 1.

Alternatively to request further packet-specific assistance information, at step S77, the second network entity 2 may identify the hypothetical buffer overflow(s) at the overflowed routing entity(ies). Then, the second network entity 2 may determine, at step S771, hypothetical split contacts C₃ₐ*, C_{3b}*, notably by performing actions as detailed at step S624 of method 60a. The second network entity 2 may also determine, at step S772, hypothetical contact incompatibilities, notably by performing actions as detailed at step S625 of method 60a.

Thus, after step S77, the second network entity 2 obtains data related to the hypothetical split contacts and contact incompatibilities, enabling the second network entity 2 to take into account the impact of the upcoming data packet j on the routing entity buffers and contact capacities to be considered for determining the best route.

Thus, at a step S78, the second network entity 2 adapts or corrects the temporary best route determined at step S74, by further taking the hypothetical split contacts and contact incompatibilities into account. Such step S78 may notably also involve repeating part or all of the route search algorithm executed at step S74.

After step S78, the second network entity 2 determines the best route for transmitting the upcoming data packet j, such best route being thus guaranteed to take into account both the buffer and contact capacity issues, due to the ongoing data packets h, i, but also potentially due to the upcoming data packet j itself.

At a step S79, the second network entity 2 may execute and/or transmit such best route for transmitting the upcoming data packet j. Step S79 may for example involve transmitting the computed best route to the source entity, when the second network entity 2 is different from the source entity. Step S79 may also involve transmitting the computed best route to the first network entity 1, as a route actually validated for transmitting the upcoming data packet j. In other words, such route thus becomes an actual route to be taken into account for determining packet-generic assistance information and the upcoming data packet j - being transmitted via such computed best route - becomes an ongoing data packet.

### Reference Signs List

- A, B, C, D, E: routing, source, destination entities (further noted α and/or β)
- h, i: ongoing data packets
- j: upcoming data packet
- 1: first entity
- 10: first communication unit
- 11: first storage unit
- 12: first processing unit
- 2: second entity
- 20: second communication unit
- 21: second storage unit
- 22: second processing unit
- C_{X(α,β)}: contact X between two given entities α and β (X being a natural number)
- C_{Xa(α,β)}: first split contact X between two given entities α and β
- C_{Xb(α,β)}: second split contact X between two given entities α and β
- C_{Xa*(α,β)}: first hypothetical split contact X between two given entities α and β
- C_{Xb*(α,β)}: second hypothetical split contact X between two given entities α and β
- t_{X,1}: start time of contact X
- t_{X,2}: end time of contact X
- t_{y,X}: arrival time of data packet y on contact X
- α(t): buffer occupancy value of entity α
- M_{α}: predefined maximum buffer occupancy of entity α
- d_{y},x: contact occupation period of data packet y on contact X
- δ_{y,α}: buffering time of data packet y on the buffer of entity α
- T: time period of hypothetical buffer overflow

## Claims

1. A method (60a) for determining assistance information for transmitting at least one upcoming data packet (j) via a route in a delay tolerant network,
said delay tolerant network including at least one contact (C₁-C₄) linking two routing entities (A-E) of the delay tolerant network,
wherein the method (60a) comprises at least the following steps:
(S60) obtaining data related to at least said contact (C₁-C₄),
(S611, S621) obtaining data related to the transmission of at least one data packet (i, j) among the upcoming data packet (j) and an ongoing data packet (i),
based on at least said data related to the transmission of the at least one data packet, (S612, S624) splitting the contact, said splitting resulting in at least:
- a first split contact (C₃ₐ, C_{3a*}) linking said two routing entities (A-E), and
- a second split contact (C_{3b}, C_{3b*}) linking said two routing entities (A-E),
said first and second split contacts (C₃ₐ, C_{3a*}, C_{3b}, C_{3b*}) depending on the contact (C₁-C₄), (S614, S626) determining the assistance information, said assistance information including at least data related to the first split contact and the second split contact (C₃ₐ, C_{3a*}, C_{3b}, C_{3b*}),
the route selected for transmitting the upcoming data packet (j) depending on said assistance information.

2. The method (60a) according to claim 1, wherein splitting the contact includes:
- determining at least one portion of the contact related to said transmission of said at least one data packet (i, j),
- splitting the contact by cutting out parts of the contact corresponding to said portion, remaining parts of said contact resulting in said first and second split contacts (C₃ₐ, C_{3a*}, C_{3b}, C_{3b*}).

3. The method (60a) according to claim 2, said portion being at least one among a time portion and a data capacity portion of the contact, and wherein splitting the contact is at least one among a time splitting and a data capacity splitting respectively.

4. The method (60a) according to any one of the precedent claims, the data related to the transmission of the ongoing data packet (i) being obtained, said data including at least an ongoing route selected for transmitting the ongoing data packet (i),
and wherein the splitting step (S612) is performed for each contact of a succession of contacts used by said ongoing route.

5. The method (60a) according to any one of the precedent claims, the data related to transmission of the upcoming data packet (j) being obtained, said data including at least parameters specific to the upcoming data packet (j),
and wherein the splitting step is a hypothetical splitting step (S624), said hypothetical splitting step (S624) being performed for at least one contact depending at least on said parameters specific to the upcoming data packet (j).

6. The method (60a) according to any one of the precedent claims further comprising: (S613, S622) determining a buffer table comprising, for each routing entity (A-E) of the delay tolerant network (DTN), a time-dependent value related to a buffer occupancy of said routing entity (A-E), and wherein the assistance information further includes data related to said buffer table.

7. The method (60a) according to claim 6 further including:
based on at least said data related to the transmission of the at least one data packet (i, j), updating the buffer table,
and wherein the assistance information further includes data related to said updated buffer table.

8. The method (60a) according to claim 7, the data related to the transmission of the ongoing data packet (i) being obtained, said data including at least an ongoing route selected for transmitting the ongoing data packet (i),
and wherein updating the buffer table is performed for each routing entity (A-E) involved in said ongoing route.

9. The method (60a) according to any one of claims 7 and 8, the data related to the transmission of the upcoming data packet (j) being obtained, and wherein the updating step is a hypothetical update (S622) of the buffer table and further includes:
determining the updated buffer table as a hypothetical buffer table corresponding to a hypothetical update of the buffer table with, for each routing entity (A-E), a hypothetical update of the time-dependent value based on a hypothetical buffer occupancy of said routing entity due to the upcoming data packet (j).

10. The method (60a) according to claim 9 further comprising, based on the hypothetical buffer table:
- (S623) identifying at least one hypothetical buffer overflow related to a hypothetical buffer occupancy of an overflowed routing entity (D) exceeding a predefined maximum buffer occupancy (M_{D}) of said overflowed routing entity (D),
and wherein the assistance information further includes data related to said at least one hypothetical buffer overflow.

11. The method (60a) according to claim 10 combined with claim 5, wherein the hypothetical splitting step (S623) is performed for the at least one contact involving the overflowed routing entity (D).

12. The method (60a) according to claim 11 further comprising:
- based on the hypothetical splitting step (S624), (S625) identifying at least one hypothetical contact incompatibility, said hypothetical contact incompatibility corresponding to a consecutiveness of contacts leading to the at least one hypothetical buffer overflow,
and wherein the assistance information further includes data related to said at least one hypothetical contact incompatibility.

13. Route search method (70) for selecting a route for transmitting at least one upcoming data packet (j) in the delay tolerant network,
said delay tolerant network including at least one contact (C₁-C₄) linking two routing entities (A-E) of the delay tolerant network,
wherein said route searching method (70) comprises at least steps of:
(S72) obtaining data related to the upcoming data packet to be transmitted,
(S73) receiving assistance information, said assistance information including at least data related to a first split contact linking said two routing entities (A-E) and a second split contact linking said two routing entities (A-E), said first and second split contacts resulting from a splitting of the contact based on at least data related to the transmission of at least one data packet (i, j) among the upcoming data packet (j) and an ongoing data packet (i),
(S74, S75) based on at least said assistance information, (S76, S78) selecting the route for transmitting the upcoming data packet (j).

14. Route search method (70) according to claim 13, wherein the assistance information further includes packet-generic assistance information, said packet-generic assistance information comprising at least one among:
- the data related to at least the first and second split contacts resulting from the splitting of the contact based on at least data related to the transmission of the ongoing data packet (i),
- data related to a buffer table comprising, for each routing entity (A-E) of the delay tolerant network (DTN), a time-dependent value related to a buffer occupancy of said routing entity (A-E),
- data related to an update of said buffer table based on at least said data related to the transmission of the ongoing data packet (i).

15. Route search method (70) according to any one of claims 13 and 14, wherein the assistance information further includes packet-specific assistance information, said packet-specific assistance information being specific to the upcoming data packet (j) and comprising at least one among:
- data related to a hypothetical buffer table including, for each routing entity (A-E), a hypothetical time-dependent value based on a hypothetical buffer occupancy of said routing entity (A-E) due to the upcoming data packet (j),
- data related to at least one hypothetical buffer overflow related to a hypothetical buffer occupancy of an overflowed routing entity (D) exceeding a predefined maximum buffer occupancy (M_{D}) of said overflowed routing entity (D),
- the data related to at least the first and second split contacts resulting from the splitting of the contact corresponding to a hypothetical splitting based on at least data related to the transmission of the upcoming data packet (j),
- data related to at least one hypothetical contact incompatibility corresponding to a consecutiveness of the contacts and/or split contacts leading to the at least one hypothetical buffer overflow.

16. Route search method (70) according to claims 14 and 15 further including, based on the packet-generic and the packet-specific assistance information:
- (S771) determining the at least first and second split contacts, corresponding to hypothetical first and second split contacts, by a hypothetical splitting of the at least one contact (C₁-C₄) which includes cutting out a portion of the contact (C₁-C₄) related to said hypothetical buffer overflow,
- (S772) identifying the at least one hypothetical contact incompatibility,
and wherein the route for transmitting the upcoming data packet (j) is further selected based on said at least one hypothetical contact incompatibility.

17. Network entity (1, 2) connected to a delay tolerant network and comprising at least one processing unit (12, 22) configured for performing at least one among:
- at least part of the method according to one of claims 1 to 12, and
- at least part of the route search method according to one of claims 13 to 16.

18. Computer software comprising instructions to implement at least one among:
- at least part of a method (60a) according to one of claims 1 to 12, when the software is executed by a first processing unit (12), and
- at least part of the route search method (70) according to one of claims 13 to 16, when the software is executed by a second processing unit (22).

19. Computer-readable non-transient recording medium on which a software is registered to implement at least one among:
- at least part of a method (60a) according to one of claims 1 to 12, when the software is executed by a first processing unit (12), and
- at least part of the route search method (70) according to one of claims 13 to 16, when the software is executed by a second processing unit (22).
